# EUROPEAN PATENT APPLICATION

(11) **EP 4 492 214 A1**
(43) Date of publication of application: **15.01.2025**
(21) Application number: 24723689.6
(22) Date of filing: 06.03.2024
(51) Int. Cl.: G06F 3/04842, G06F 3/04817, G06F 3/0482, G06F 3/04883, G06F 3/04845

(54) **ELECTRONIC DEVICE FOR DISPLAYING VISUAL OBJECT FOR PROVIDING PLURALITY OF SCREENS, AND METHOD THEREFOR**

(30) Priority: 29.05.2023 KR 20230068775; 12.07.2023 KR 20230090729
(71) Applicant: Samsung Electronics Co., Ltd, Suwon-si, Gyeonggi-do 16677 (KR)
(72) Inventor: MOON, Minjeong, Suwon-si Gyeonggi-do 16677 (KR); PARK, Chanpyo, Suwon-si Gyeonggi-do 16677 (KR); NAM, Myoungwoo, Suwon-si Gyeonggi-do 16677 (KR); SUNG, Youngjin, Suwon-si Gyeonggi-do 16677 (KR); SON, Dongil, Suwon-si Gyeonggi-do 16677 (KR); SON, Seoyoung, Suwon-si Gyeonggi-do 16677 (KR); YEO, Jaeyung, Suwon-si Gyeonggi-do 16677 (KR)
(74) Representative: HGF
(86) International application number: PCT/KR2024/002912
(87) International publication number: WO 2024/248282

(57) **Abstract**

According to an embodiment, a processor an electronic device identifies a first input indicating to select a first visual object. The processor moves a position of a second visual object from a first position to a second position in response to a second input on the second visual object. The processor displays a third visual object in response to identifying that the second visual object in the second position at least partially overlaps a first portion of the first visual object. The processor displays a fourth visual object in response to identifying that the second visual object in the second position overlaps a second portion of the first visual object.

## Description

### [Technical Field]

The present disclosure relates to an electronic device for displaying a visual object for providing a plurality of screens and a method thereof.

### [Background Art]

The shapes and sizes of electronic devices are becoming increasingly varied as the functions of electronic devices diversify. More electronic devices having a reduced size and/or a reduced volume are being designed to improve the portability of the devices. An electronic device may include a display for visualizing information. The electronic device may provide a user with various types of information using the display.

### [Disclosure]

### [Technical Solution]

According to an embodiment, an electronic device may comprise a display, memory, comprising one or more storage mediums, storing instructions, at least one processor comprising processing circuitry. The instructions may, when executed by the at least one processor individually and/or collectively, cause the electronic device to display a plurality of visual objects on the display. The instructions may, when executed by the at least one processor individually and/or collectively, cause the electronic device to identify a first input indicating a selection of a first visual object among the plurality of visual objects. The instructions may, when executed by the at least one processor individually and/or collectively, cause the electronic device to move, in response to a second input on a second visual object among the plurality of visual objects, a position of the second visual object from a first position to a second position. The instructions may, when executed by the at least one processor individually and/or collectively, cause the electronic device to, in response to identifying that the second visual object in the second position at least partially overlaps a first portion of the first visual object, display a third visual object on the display. The instructions may, when executed by the at least one processor individually and/or collectively, cause the electronic device to, in response to a third input indicating a selection of the third visual object, display a first screen, corresponding to the first visual object, within a first area of the display and display a second screen, corresponding to the second visual object, within a second area of the display as a split-view. The instructions may, when executed by the at least one processor individually and/or collectively, cause the electronic device to, in response to identifying that the second visual object in the second portion overlaps a second portion of the first visual object different to the first portion, display a fourth visual object on the display.

According to an embodiment, a method of an electronic device may comprise displaying a plurality of visual objects on a display of the electronic device. The method may comprise identifying a first input indicating a selectin of a first visual object among the plurality of visual objects. The method may comprise identifying a second input indicating a movement of a second visual object among the plurality of visual objects, and moving a position of the second visual object from a first position to a second position according to the second input. The method may comprise, in response to identifying that the second position of the second visual object is at least partially overlaps a first portion among portions associated with the first visual object, displaying a third visual object. The method may comprise, in response to a third input indicating a selection of the third visual object, displaying a first screen, corresponding to the first visual object, within a first area of the display and displaying a second screen, corresponding to the second visual object, within a second area of the display as a split-view. The method may comprise, in response to identifying that the second visual object in the second position overlaps a second portion of the first visual object different from the first portion, displaying a fourth visual on the display.

According to an embodiment, an electronic device may comprise a display and a processor. The processor may be configured to, while displaying a list of software applications, display a visual object for simultaneously providing a plurality of screens in the list. The processor may be configured to display a first screen among the plurality of screens based on the size of an active area of the display in response to an input indicating selection of the visual object. The processor may be configured to display a second screen among the plurality of screens superimposed on the first screen displayed in the active area in response to the input.

According to an embodiment, a method of an electronic device may comprise displaying a visual object for simultaneously providing a plurality of screens in a list while displaying the list of software applications installed in the electronic device. The method may comprise displaying a first screen among the plurality of screens based on a size of an active area of a display of the electronic device in response to an input indicating selection of the visual object. The method may comprise displaying a second screen among the plurality of screens superimposed on the first screen displayed in the active area in response to the input.

### [Description of the Drawings]

FIG. 1 exemplarily illustrates states of an electronic device according to an embodiment.
FIG. 2 illustrates an example of a block diagram of an electronic device according to an embodiment.
FIG. 3 illustrates an example of a flowchart of a method performed by an electronic device according to an embodiment.
FIGS. 4A to 4C illustrate an example of an operation of an electronic device displaying a visual object for providing a plurality of screens.
FIGS. 5A to 5D illustrate an example of an operation of an electronic device displaying a visual object for providing a plurality of screens.
FIGS. 6A to 6B illustrate an example of an operation of an electronic device based on positions of visual objects overlapping each other.
FIG. 7 illustrates an example of an operation of an electronic device based on a position of visual objects overlapping each other.
FIGS. 8A to 8E illustrate an example of a flowchart of an electronic device according to an embodiment.
FIG. 9 illustrates an example of an operation of an electronic device that identified an input indicating an overlap of visual objects.
FIG. 10 illustrates an example of a flowchart of an electronic device according to an embodiment.
FIGS. 11A to 11B illustrate an example of an operation of an electronic device that identified an input for generating a visual object providing a plurality of screens.
FIGS. 12A to 12C illustrate an example of an operation of an electronic device performed based on a virtual space.
FIGS. 13A to 13B illustrate an example of an operation of an electronic device connected to one or more external displays.
FIG. 14 illustrates an example of an operation of an electronic device for adjusting a layout corresponding to a visual object.
FIG. 15 illustrates an example of an operation of an electronic device according to an embodiment.
FIG. 16 is a block diagram of an electronic device in a network environment according to various embodiments.

### [Mode for Invention]

Hereinafter, various embodiments of the present document will be described with reference to the accompanying drawings.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, and may interchangeably be used with other terms, for example, "part," or "circuitry". A module may be a single integral component, or a minimum unit or part thereof, adapted to perform one or more functions. For example, according to an embodiment, the module may be implemented in a form of an application-specific integrated circuit (ASIC).

Users of electronic devices are increasingly wanting to use and display multiple applications on their electronic device simultaneously. Splitting the screen allows screens from different applications to be shown simultaneously on a single display, where each application screen is displayed in its own designated region of the display. However, it is traditionally difficult for a user to create a split screen, especially from a home screen. Setting up the split screens can be a laborious, convoluted, and non-intuitive process. When a user frequently wants to operate the same two or more applications simultaneously using a split screen, it is time-consuming and frustrating for the user to go through this process every time.

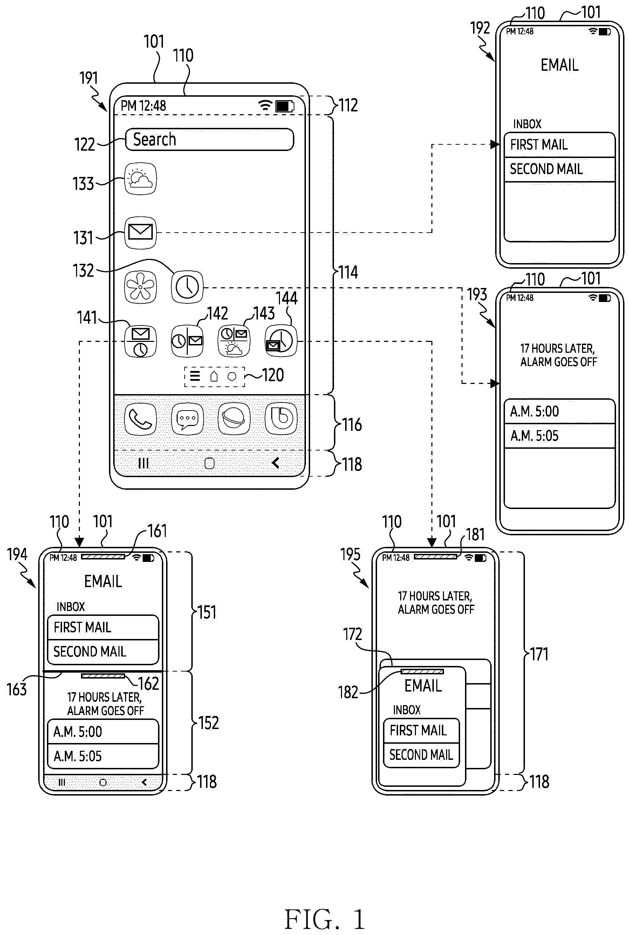

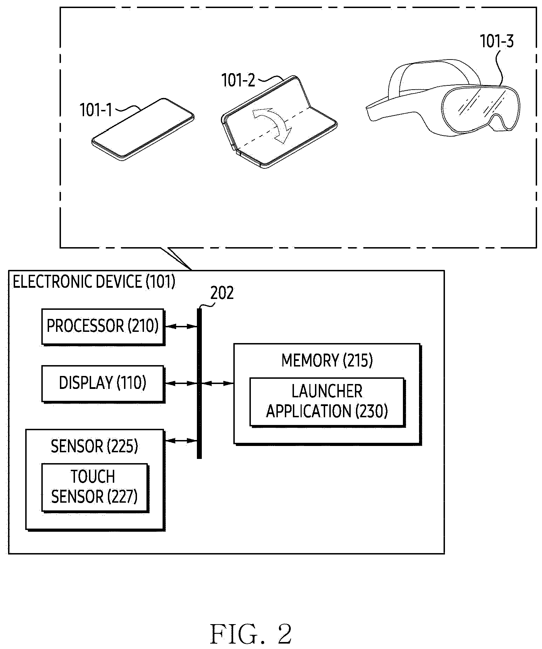

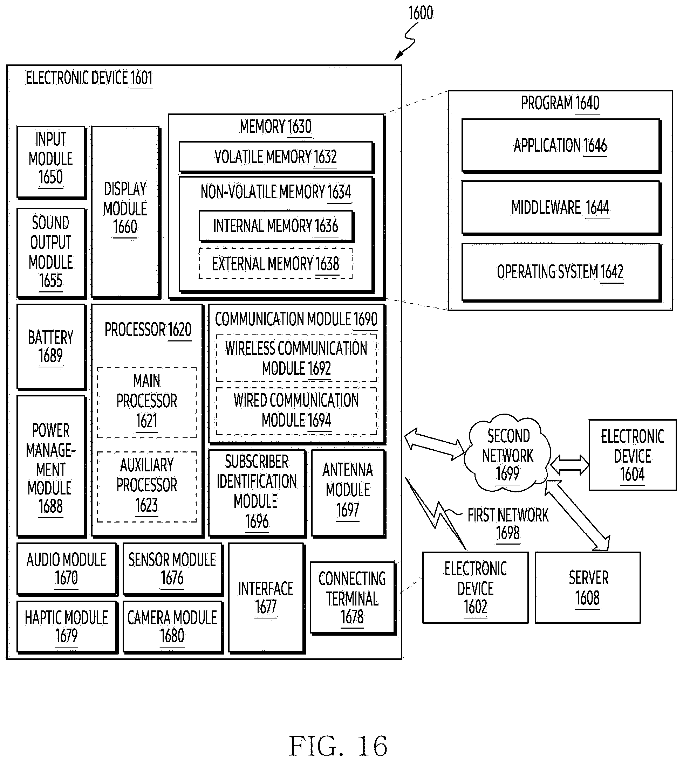

FIG. 1 exemplarily illustrates states 191, 192, 193, 194, and 195 of an electronic device 101 according to an embodiment. The states 191, 192, 193, 194, and 195 show examples of some of the different possible arrangements of a display when displaying content to a user. In an embodiment, in terms of being owned by a user, the electronic device 101 may be referred to as a terminal (or user terminal). The terminal may include, for example, a personal computer (PC) such as a laptop and desktop. The terminal may include, for example, a smartphone, a smartpad, and/or a tablet PC. The terminal may include a smart accessory such as a smartwatch and/or a head-mounted device (HMD). One or more hardware included in the electronic device 101 of FIG. 1 will be described with reference to FIGS. 2 and/or 16.

Referring to FIG. 1, different states 191, 192, 193, 194, and 195 of the electronic device 101 divided by a screen displayed to the user are illustrated. That is, the screen may be divided in a plurality of different ways or configurations when displaying content to a user. Hereinafter, the screen may mean a user interface (UI) displayed in at least a portion of a display 110. The screen may include, for example, a window of the Windows operating system and/or an activity of the Android operating system. The embodiment is not limited thereto. For example, a screen displayed by the electronic device 101 may be formed in an external space by light outputted from the electronic device 101 to the external space. For example, the screen may be formed on a plane on which the light is projected in the external space. For example, the screen may be displayed three-dimensionally in a form of a hologram in the external space.

According to an embodiment, the electronic device 101 may include one or more software applications to support various functions. The electronic device 101 may display a list of functions supported by the electronic device 101 on the display 110. In case that a plurality of software applications are installed on the electronic device 101, a list of the plurality of software applications may be displayed on the display 110 as the list of functions supported by the electronic device 101. Referring to FIG. 1, the state 191 of the electronic device 101 displaying a screen including the list of the software applications is exemplarily illustrated. For example, in the state 191, the electronic device 101 may display a screen provided from a designated software application such as a launcher application. The screen displayed by the electronic device 101 in the state 191 may be referred to as a launcher screen and/or a home screen.

Referring to FIG. 1, the screen displayed by the electronic device 101 in the state 191 may be divided into different areas 112, 114, 116, and 118. Each of the areas 112, 114, 116, and 118 may be formed along a width direction among the width direction and a height direction of the display 110 in a portrait mode of the electronic device 101. A mode of the electronic device 101 may include the above-described portrait mode and a landscape mode. The portrait mode may be a mode in which a first direction of a relatively short edge of the display 110 corresponds to the width direction of a screen displayed on the display 110, a second direction of a relatively long edge corresponds to the height direction of the screen. The landscape mode may be a mode in which the first direction of the display 110 corresponds to the height direction of the screen displayed on the display 110 and the second direction corresponds to the width direction of the screen. The electronic device 101 in the landscape mode may arrange the areas 112, 114, 116, and 118 along the first direction and/or the height direction of the display 110.

Referring to FIG. 1, the area 112 in the home screen displayed by the electronic device 101 in the state 191 may be referred to as a status bar. In the area 112, the electronic device 101 may display text, an icon, a thumbnail, and/or an image indicating time, state of charge (SOC) of a battery, and/or sensitivity of the wireless communication network. The text and/or the icon displayed in the area 112 are not limited to the above example, and in a state that the software application (or system process) is executed, the electronic device 101 may display the text and/or the icon in the area 112. In an embodiment, based on (or in response to) a user input to the area 112, the electronic device 101 may display a notification panel (or notification drawer). The user input may be identified, for example, by a swipe gesture performed along a designated direction of the display 110 (e.g., a direction of a first edge among the first edge of the display 110 or a second edge shorter than the first edge).

Referring to FIG. 1, the area 118 displayed by the electronic device 101 in the state 191 may be referred to as a navigation bar. Although screens of the electronic device 101 including the area 118 are exemplarily illustrated, the electronic device 101 may at least temporarily hide the area 118 in the display 110. In the area 118, the electronic device 101 may display executable objects for switching a screen displayed through the display 110. The executable objects displayed in the area 118 may include at least one of a visual object (e.g., a home button) for displaying the launcher screen and/or the home screen, such as the screen displayed on the display 110 in the state 191, a visual object (e.g., a multi-tasking button) for displaying a list of screens the displayed by the electronic device 101, or a visual object (e.g., a back button) for switching to a screen that was displayed immediately before a screen currently being displayed on the display 110 among the screens. The visual object may mean an object that is deployable in the screen for transmission and/or interaction of information. The visual object may be referred to as an icon, a visual element, a UI element, a view object, and/or a view element. The visual object may include the text, the image, the icon, a video, a button, a check box, a radio button, a text box, a slider and/or a table.

Referring to FIG. 1, the area 114 displayed by the electronic device 101 in the state 191 may be referred to as a workspace area, a launcher area, and/or a home area. In the area 114, the electronic device 101 may display icons representing the software applications. In terms of displaying the icons arranged in a grid, the area 114 may be referred to as a grid area. Referring to FIG. 1, visual objects 131, 132, and 133 having a form of an icon representing a software application installed in the electronic device 101 may be displayed in the area 114. The terms visual object and icon may be used interchangeably. Each of the visual objects 131, 132, and 133 may correspond to different software applications installed in the electronic device 101. For example, the visual object 131 including an icon for executing an email application for viewing an email, the visual object 132 including an icon representing an alarm application for providing an alarm, and/or the visual object 133 corresponding to a weather application for providing weather information are exemplarily illustrated, but the embodiment is not limited thereto. Providing an input on the visual object may cause the application associated with the selected visual object to be executed such that a screen associated with the application is displayed on the display.

Referring to FIG. 1, the electronic device 101 may display a widget 122 in the area 114 together with an icon corresponding to the software application. The widget 122 may be disposed in the area 114 to visualize information identified by the electronic device 101 and/or more quickly receive an input for executing a specific function. Although the widget 122 having a form of a text box for quickly receiving a query for search is exemplarily illustrated, a shape, color, and/or size of the widget (or gadget) that may be displayed through the area 114 is not limited to the widget 122 of FIG. 1.

According to an embodiment, the electronic device 101 may display, in the area 114, visual objects 120 for switching combination of icons and/or a widget 122 displayed through the area 114. The visual objects 120 may be referred to as a pager and/or a page controller. Although the visual objects 120 including a plurality of dots are exemplarily illustrated, the embodiment is not limited thereto, and a page controller including different numbers may be displayed. Based on an input indicating a selection of any one of the visual objects 120, the electronic device 101 may change the icons and/or the widget 122 displayed in the area 114.

Referring to FIG. 1, the area 116 displayed by the electronic device 101 in the state 191 may be referred to as a hotseat and/or a dock area. In the area 116, the electronic device 101 may display icons corresponding to pre-registered software applications. For example, the electronic device 101 may display at least one icon registered by the user input in the area 116. In the state 191, the electronic device 101 may maintain displaying the icons in the area 116 independent of changing the icon and/or the widget 122 in the area 114 based on the visual objects 120.

According to an embodiment, the electronic device 101 may identify an input indicating execution of at least one software application in the state 191. Based on the input, the electronic device 101 may display a screen (or a combination of screens) provided from the at least one software application corresponding to the input on the display 110. For example, in the state 191, in response to an input indicating selection of the visual object 131, the electronic device 101 may switch to the state 192 for providing a screen of a software application corresponding to the visual object 131. The input indicating the selection of the visual object 131 may be identified by a tap gesture that taps a portion of the display 110 on which the visual object 131 is displayed once and/or a mouse input that clicks the visual object 131. A tap gesture may be a touch on a portion of the display for less than a predetermined amount of time.

Referring to FIG. 1, in the state 192, the electronic device 101 may execute the software application (e.g., the email application) corresponding to the visual object 131, and may display a screen provided from the executed software application based on a size of the active area (or display area) of the display 110. Since the electronic device 101 displays the screen based on the size of the active area, a width and/or a height of the screen displayed on the display 110 may substantially match a width and/or a height of the active area.

Referring to FIG. 1, in response to an input indicating selection of the visual object 132 in the state 191, the electronic device 101 may display a screen provided from the alarm application corresponding to the visual object 132 by switching to the state 193. In the state 193, the screen displayed in the display 110 may occupy an entire area of the active area of the display 110.

According to an embodiment, the electronic device 101 may display a visual object for providing a combination of screens based on multi-tasking in the area 114 in which an icon (e.g., the visual objects 131, 132, and 133) for executing one software application are displayed. Referring to FIG. 1, visual objects 141, 142, 143, and 144 displayed to provide the combination of screens based on the multi-tasking and in the form of the icon are exemplarily illustrated. Each of the visual objects 141, 142, 143, and 144 may include images and/or icons representing screens to be displayed by the electronic device 101. For example, in the visual object 141 for providing a combination of screens provided from the email application and the alarm application, the electronic device 101 may display icons corresponding to each of the email application and the alarm application. A layout of icons displayed in the visual object 141 may correspond to a layout (or a positional relationship and/or an arrangement) of screens to be displayed in the display 110 by an input to the visual object 141.

Referring to FIG. 1, in the state 191 that the visual object 141 including icons arranged along the vertical direction of the display 110 is displayed, the electronic device 101 may switch to the state 194 based on an input indicating selection of the visual object 141. Hereinafter, the vertical direction may correspond to the direction of the first edge among the first edge of the display 110 or the second edge shorter than the first edge in the portrait mode and may correspond to the second edge in the landscape mode. In the state 194, the electronic device 101 may display screens corresponding to icons displayed through the visual object 141 along the vertical direction of the display 110. For example, the electronic device 101 may display the screens in a first area 151 including an upper end of the display 110 and a second area 152 including a lower end of the display 110. For example, in case that an icon corresponding to the alarm application is disposed below an icon corresponding to the email application along the vertical direction in the visual object 141, the electronic device 101 may display the screen provided from the alarm application below a screen provided from the email application along the vertical direction, based on the input to the visual object 141. In the state 194 of FIG. 1, the areas 151 and 152 in which screens of the email application and the alarm application are displayed, respectively, may be arranged along the vertical direction in the display 110. Between the areas 151 and 152, the electronic device 101 may display a boundary line 163 (or a frame line) parallel to a horizontal direction of the display 110. Hereinafter, the horizontal direction of the display 110 may correspond to a direction of the second edge shorter than the first edge of the display 110 in the portrait mode, and may correspond to the first edge in the landscape mode.

Referring to FIG. 1, in the state 194 displaying a combination of a plurality of screens, the electronic device 101 may display handles 161 and 162 for adjusting a position and/or a size of each of the plurality of screens together with the boundary line 163 for dividing the plurality of screens. The handle 161 overlapped on the first area 151 in which a first screen provided from the email application is displayed may be displayed to receive an input changing a position and/or a size of the display 110 of the first screen. Based on an input indicating selection of the handle 161, the electronic device 101 may display a menu including options for controlling the first screen displayed through the first area 151.

Referring to FIG. 1, through a handle 162 overlapped on the second area 152 in which a second screen provided from the alarm application is displayed, similar to the handle 161 in the first area 151, the electronic device 101 may identify an input changing a position and/or a size in the display 110 of the second screen. Based on an input indicating movement of the handle 162, the electronic device 101 may change a positional relationship of the areas 151 and 152. Similarly, based on an input indicating movement of the boundary line 163, the electronic device 101 may change a ratio of areas (or sizes) of the display 110 occupied by each of the areas 151 and 152. The ratio may include a ratio between edges of the areas 151 and 152, and/or a ratio of areas of the areas 151 and 152.

Referring to FIG. 1, a visual object 142 for providing the combination of the screens provided from the email application and the alarm application is illustrated. In the visual object 142, icons corresponding to the email application and the alarm application may be arranged along the direction of the second edge shorter than the first edge of the display 110. For example, in the visual object 142, the icon corresponding to the alarm application may be disposed on a left side of the icon corresponding to the email application. In response to an input indicating selection of the visual object 142, the electronic device 101 may display screens provided from the email application and the alarm application along the direction of the second edge in the display 110. For example, the electronic device 101 may display the screen provided from the alarm application in a portion including the left side of the display 110, and may display the screen provided from the email application in a portion including a right side of the display 110. Similar to the handles 161 and 162 in the state 194, the electronic device 101 may display a handle for changing the a position and/or a size of the screens, superimposed on each portion on which the screens are displayed in the display 110.

Referring to FIG. 1, the visual object 143 for providing a combination of the screens provided from three software applications (e.g., the alarm application, the email application, and the weather application) may be displayed on the display 110. In the visual object 143, the electronic device 101 may guide an arrangement and/or a positional relationship of the screens to be displayed in the display 110 by an input indicating selection of the visual object 143, based on an arrangement and/or a positional relationship of the icons of the software applications.

Referring to FIG. 1, in the state 194, the electronic device 101 may execute a function based on multi-tasking by using the second area 152 located under the first area 151 (e.g., the second area 152 located under the first area 151), along one direction (e.g., a vertical direction corresponding to the first edge, among the first edge of the display 110 or the second edge shorter than the first edge) of the display 110 and the first area 151. Picture-by-picture (PBP) may include the state 194 displaying screens provided from the plurality of software applications by using the areas 151 and 152 located side by side. In case of displaying the screens based on the PBP, the electronic device 101 may display the screens horizontally or vertically. The screens displayed on the display 110 based on the PBP may not be overlapped each other in the display 110. For example, the first screen among the screens displayed based on the PBP may be displayed alongside the second screen among the screens in the display 110. Based on the PBP, the electronic device 101 may tile the screens in the display 110.

Referring to FIG. 1, the visual object 144 for providing the combination of the screens provided from the software applications (e.g., the alarm application and the email application) may be displayed in the display 110, based on a picture-in-picture (PIP) distinct from the PBP. The electronic device 101 may display the visual object 144 including the icon corresponding to the alarm application and the icon corresponding to the email application. In the visual object 144, the icons may be arranged based on a layout (e.g., a PIP-based layout) of the screens to be displayed on the display 110 by an input associated with the visual object 144. For example, in the visual object 144, based on the PIP layout, the icon corresponding to the email application may be overlapped on the icon corresponding to the alarm application. Based on an input to the visual object 144 displayed in the state 191, the electronic device 101 may switch to the state 195.

Referring to FIG. 1, in the state 195, the electronic device 101 may display a first screen provided from the alarm application in a first area 171 having a size corresponding to the active area of the display 110. The electronic device 101 may display a second screen provided from the email application on the second area 172 overlapped on the first area 171. The PIP may include the state 195 displaying screens provided from the plurality of software applications by using the areas 171 and 172 that are overlapped each other. In the state 195, the second screen may be displayed to obscure (or cover) at least a portion of the first screen. An arrangement of the areas 171 and 172 in which the first screen and the second screen are displayed in the state 195 may correspond to an arrangement of icons included in the visual object 144. Similar to the handles 161 and 162 in the state 194, the electronic device 101 may display handles 181 and 182 for adjusting a position and/or a size of screens displayed in each of the areas 171 and 172.

As in the states 194 and 195 of FIG. 1, the electronic device 101 may simultaneously display screens provided from software applications that are substantially simultaneously executed based on the PBP and/or the PIP. A state (e.g., the state 194) in which the screens are displayed on the areas 151 and 152 so as to not overlap each other based on the PBP may be referred to as a multi-window. A state (e.g., the state 195) in which the screens are displayed in at least partially overlapped areas 171 and 172 based on the PIP may be referred to as a pop-up window. According to an embodiment, the pop-up window may correspond to a screen having a relatively small size among screens displayed based on the PIP. The state (e.g., the states 194 and 195) of the electronic device 101 that provides the screens based on the PBP and/or the PIP may be referred to as a split screen, multi-window, multi-tasking, split window, split-view and/or multi-view.

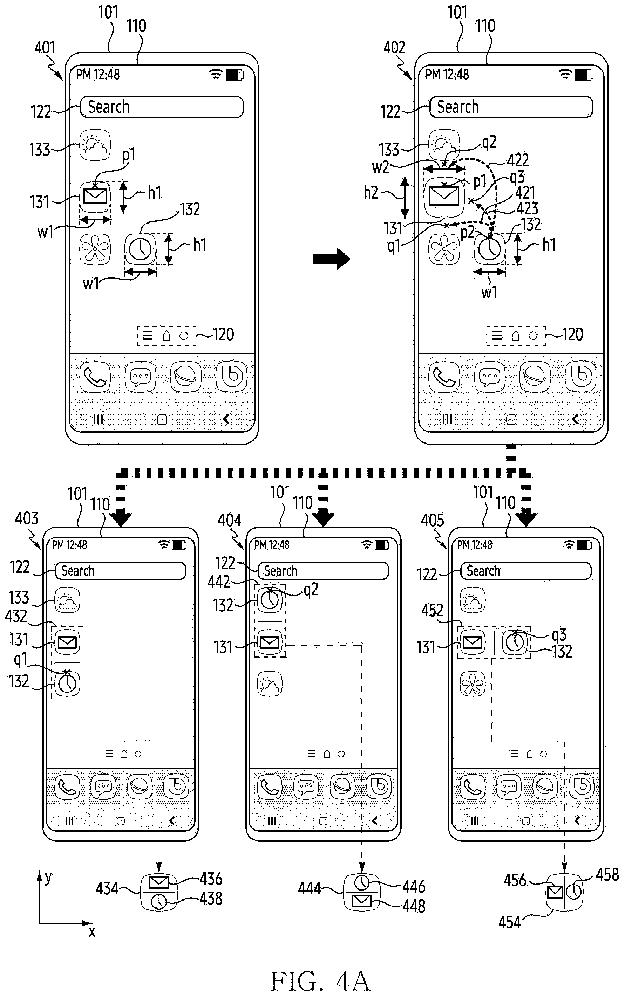

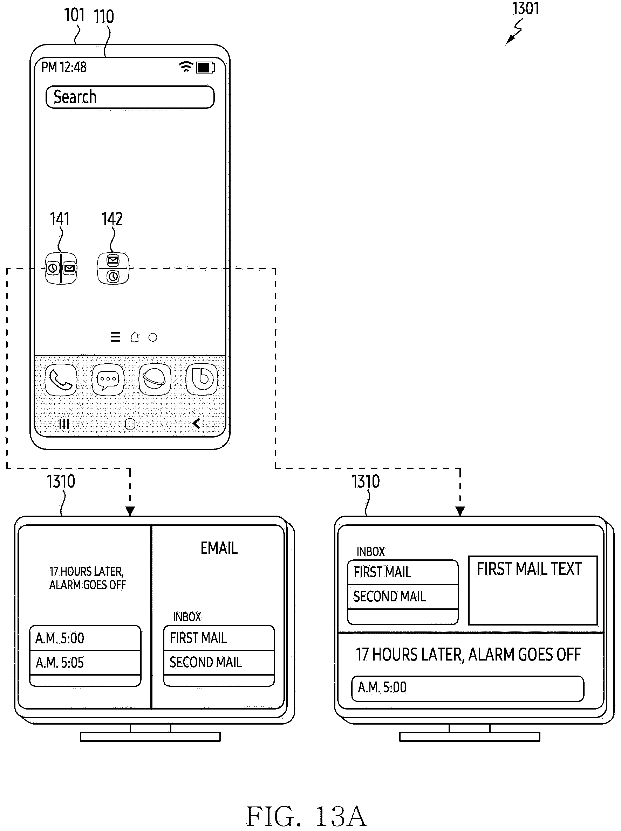

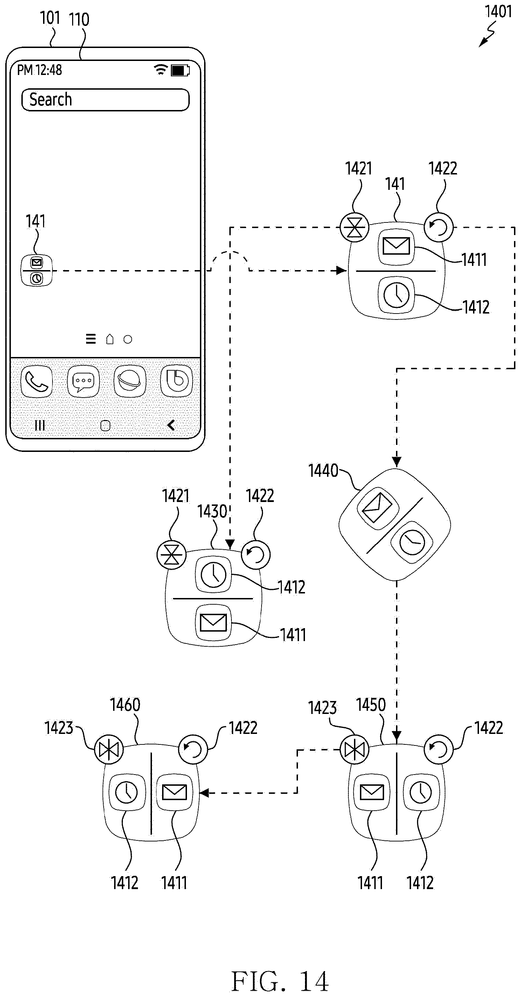

As described above, according to an embodiment, the electronic device 101 may display the visual objects 141, 142, 143, and 144 for simultaneously displaying screens based on the multi-window in the launcher screen. In response to selecting a visual object 141, 142, 143, 144, the electronic device may substantially simultaneously launch and display the two or more applications indicated by the selected visual object. The electronic device 101 may display the visual objects 141, 142, 143, and 144 based on an input (e.g., a drag input) for moving an icon (e.g., the visual objects 131, 132, and 133) corresponding to one software application. For example, the electronic device 101 may display another visual object (e.g., visual objects 141, 142, and 144) for simultaneously providing screens associated with the visual objects 131 and 132 based on an input for moving the visual object 132 on the visual object 131. In other words, the electronic device may generate and display a visual object 141, 142, 144 in response to receiving a user input. The user input may be a touch gesture to drag a first visual object 132 to a second visual object 131 such that a portion of the visual object overlaps. The electronic device 101 may determine a layout (or an arrangement or a configuration) of the screens to be displayed through the other visual object based on a position and/or a direction of the visual object 132 moved onto the visual object 131 by the input. In other words, when the generated visual object 141, 142, 143, 144, is selected by the user, the electronic device may determine a layout of the multi-windows based on the layout, shown in the visual object 141, 142, 143, 144. The layout of the visual object 141, 142, 143, 144 is determined based on how a portion of the visual object 132 overlaps onto a portion of the visual object 131 by the input used to generate the visual object 141, 142, 143, 144. As in the states 194 and 195 of FIG. 1, the electronic device 101 may determine the layout among the PIP and/or the PBP. According to an embodiment, an operation in which the electronic device 101 identifies the input will be described with reference to FIGS. 4A to 4C, 5A to 5D, 6A to 6B, 7, 9, 11A to 11B, and 12A to 12C. An operation in which the electronic device 101 displays screens based on the other visual object will be described with reference to FIGS. 13A to 13B. An operation in which the electronic device 101 changes the layout of the screens to be displayed through the other visual object will be described with reference to FIGS. 14 to 15.

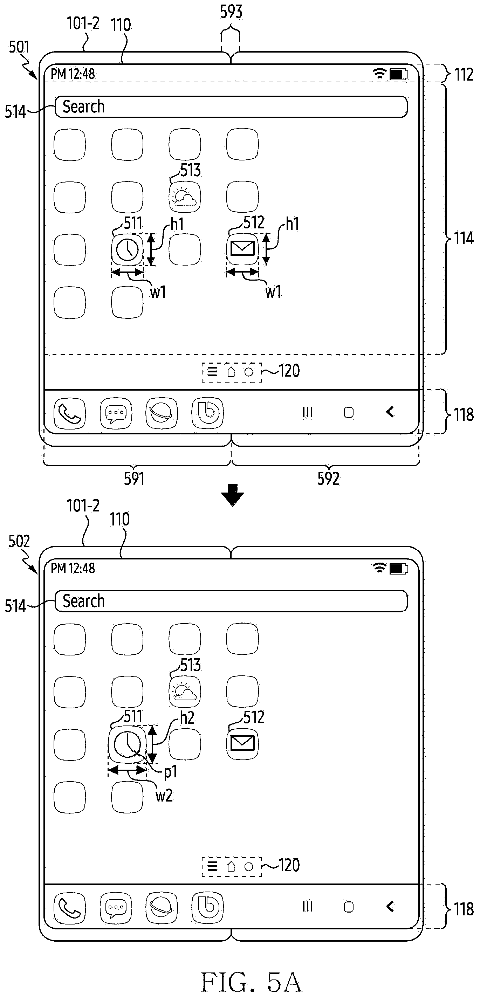

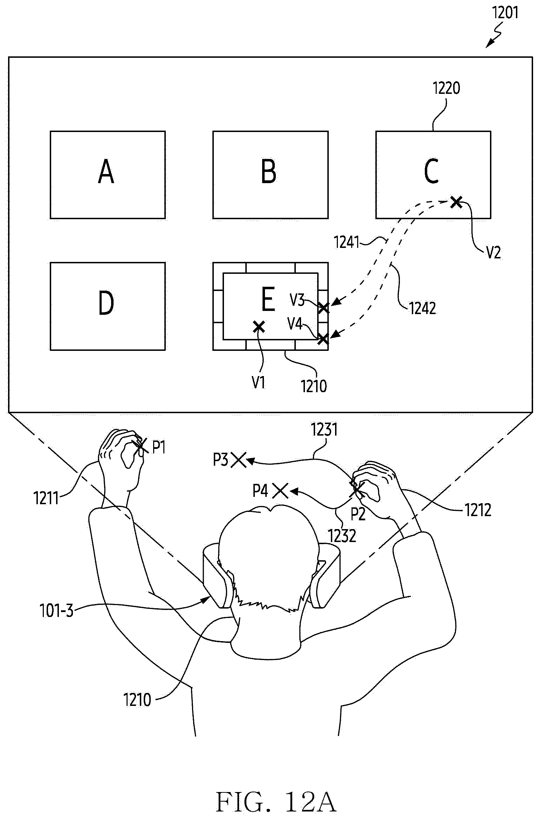

FIG. 2 illustrates an example of a block diagram of an electronic device 101 according to an embodiment. An electronic device 101 of FIG. 1 may be an example of the electronic device 101 of FIG. 2. The electronic device 101 may be divided into an electronic device 101-1 having a shape of a bar-type smartphone, an electronic device 101-2 having a deformable shape, and/or an electronic device 101-3 having a shape wearable by a user, depending on a shape, a size, and/or a form factor. An operation associated with the electronic device 101-2 will be described with reference to FIGS. 5A to 5D. An operation associated with the electronic device 101-3 will be described with reference to FIGS. 12A to 12C.

Referring to FIG. 2, according to an embodiment, the electronic device 101 may include at least one of a processor 210, a memory 215, a display 110, or a sensor 225. The processor 210, the memory 215, the display 110, and the sensor 225 may be electrically and/or operably coupled with each other by an electronical component (or an electric component) such as a communication bus 202. Hereinafter, that hardware is operably coupled may mean that a direct connection or an indirect connection between hardware is established wired or wirelessly so that a second hardware is controlled by a first hardware among the hardware. Although illustrated based on different blocks, the embodiment is not limited thereto, and some (e.g., at least some of the processor 210 and the memory 215) of the hardware of FIG. 2 may be included in a single integrated circuit such as a system on a chip (SoC). The type and/or number of hardware included in the electronic device 101 are not limited to those illustrated in FIG. 2. For example, the electronic device 101 may include only some of the hardware illustrated in FIG. 2.

According to an embodiment, the processor 210 of the electronic device 101 may include hardware and/or a circuit for processing data based on one or more instructions. The hardware for processing the data may include, for example, an arithmetic and logic unit (ALU), a floating point unit (FPU), a field programmable gate array (FPGA), a central processing unit (CPU), and/or an application processor (AP). The number of the processors 210 may be one or more. For example, the processor 210 may have a structure of a multi-core processor, such as a dual core, a quad core, or a hexa core.

According to an embodiment, the memory 215 of the electronic device 101 may include a hardware component for storing data and/or an instruction inputted to the processor 210 and/or outputted from the processor 210. The memory 215 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, a solid state drive (SSD), and an embedded multi media card (eMMC).

According to an embodiment, the display 110 of the electronic device 101 may output visualized information (e.g., a screen of FIG. 1) to the user. For example, the display 110 may be controlled to visualize information generated by the processor 210 and/or a graphic processing unit (GPU). The display 110 may include a liquid crystal display (LCD), a plasma display panel (PDP), and/or one or more light emitting diodes (LEDs). The LED may include an organic LED (OLED). The display 110 may include a flat panel display (FPD) and/or an electronic paper. The embodiment is not limited thereto, and the display 110 may have at least a partially curved shape or may have a deformable shape (e.g., a flexible display).

The sensor 225 of the electronic device 101 according to an embodiment may generate electrical information that may be processed by the processor 210 and/or the memory 215 from non-electronic information associated with the electronic device 101. For example, the sensor 225 may include a global positioning system (GPS) sensor for detecting the geographic location of the electronic device 101. In addition to the GPS method, the sensor 225 may generate information indicating a geographic location of the electronic device 101 based on, for example, a global navigation satellite system (GNSS) such as galileo, beidou, and compass. The information may be stored in the memory 215, may be processed by the processor 210, or may be transmitted to another electronic device distinct from the electronic device 101 through a communication circuit. The sensor 225 is not limited to the above, and may include an image sensor, an illuminance sensor, and/or a ToF sensor for detecting an electromagnetic wave including light.

According to an embodiment, the sensor 225 of the electronic device 101 may include a touch sensor 227 for detecting the presence of an external object (e.g., a user's finger) on the display 110. The touch sensor 227 may detect a touch or a proximity (within a predetermined distance) of the external object on the display 110. The touch sensor 227 may be referred to as a touch sensor panel (TSP). For example, based on the TSP, the electronic device 101 may detect an external object that is in contact with the display 110 or floating on the display 110. In response to detecting the external object, the electronic device 101 may execute a function associated with a specific visual object corresponding to a position of the external object on the display 110 among visual objects that are being displayed on the display 110.

Although not illustrated, according to an embodiment, the electronic device 101 may include an output means for outputting information in a form other than a visualized form. For example, the electronic device 101 may include a speaker for outputting an acoustic signal. For example, the electronic device 101 may include a motor for providing haptic feedback based on vibration.

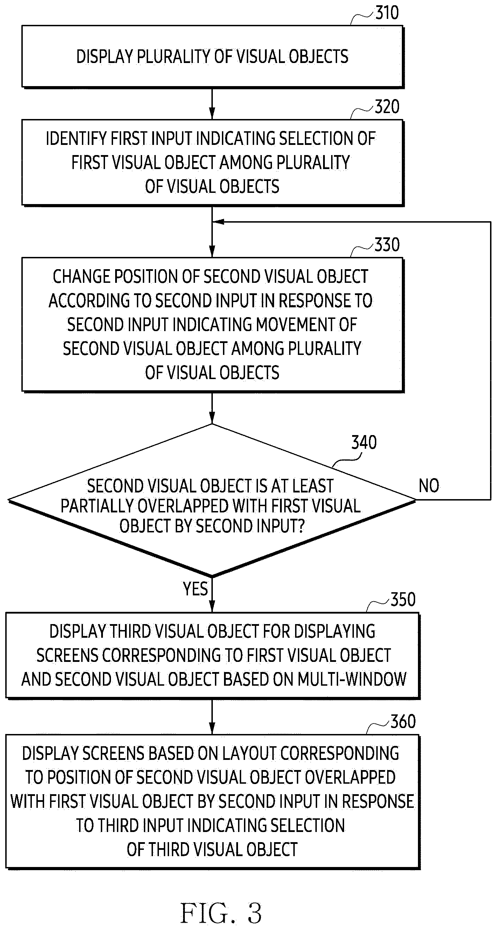

According to an embodiment, in the memory 215 of the electronic device 101, one or more instructions (or commands) indicating calculations and/or operations to be performed on data by the processor 210 may be stored. A set of one or more instructions may be referred to as a firmware, an operating system, a process, a routine, a sub-routine, and/or a software application (or application). For example, the electronic device 101 and/or the processor 210 may perform at least one of operations of FIGS. 3, 8A to 8E, and/or 10 when a set of a plurality of instructions distributed in a form of the operating system, firmware, driver, and/or application is executed. Hereinafter, that the application is installed in the electronic device 101 means that one or more instructions provided in a form of the application are stored in the memory 215 of the electronic device 101, and the one or more applications are stored in an executable format (e.g., a file having an extension designated by the operating system of the electronic device 101) by the processor 210 of the electronic device 101.

Referring to FIG. 2, a launcher application 230 is illustrated as an example of a software application installed in the memory 215 of the electronic device 101. In a state in which the launcher application 230 is executed, the processor 210 may display a launcher screen on the display 110. A state 191 of FIG. 1 may be an exemplary state of displaying the launcher screen based on execution of the launcher application 230. Through the launcher screen provided by the launcher application 230, the processor 210 may identify an input for executing one or more software applications. The input may include an input indicating a selection of one or more icons (e.g., visual objects 131, 132, 133, 141, 142, 143, and 144 of FIG. 1) included in the launcher screen, as described above with reference to FIG. 1. The processor 210 may identify the input based on data obtained by the touch sensor 227. The processor 210 may receive the data obtained by the touch sensor 227.

According to an embodiment, the processor 210 of the electronic device 101 may add an icon to the launcher screen or may edit and/or remove an icon displayed on the launcher screen in a state in which the launcher application 230 is executed. For example, in response to the input identified through the touch sensor 227, the processor 210 may add an icon for executing a plurality of software applications substantially simultaneously based on a multi-window, split-view, multi-view, multi-tasking, and/or split window to the launcher screen. The icon may be displayed to switch to a state and/or mode of the electronic device 101 for providing a plurality of screens, referred to as a split screen, multi-window, multi-tasking, split-window, split-view, and/or multi-view, as illustrated in states 194 and 195 of FIG. 1. The input may include a gesture stacking (or piling up) visual objects (e.g., the icon) corresponding to the plurality of software applications. Hereinafter, the gesture stacking the visual objects may include a gesture (e.g., a drag gesture) overlapping another visual object by exceeding a designated area and/or extent (or area) on a specific visual object. Based on a positional relationship and/or direction of the visual objects overlapped by the input, the electronic device 101 may identify layouts of screens provided from the plurality of software applications. In response to a second input indicating the selection of the icon added based on the first input, the electronic device 101 may display the screens on the display 110 based on the identified layout. Hereinafter, an example of an operation performed by the electronic device 101 to add the icon will be described with reference to FIG. 3.

FIG. 3 illustrates an example of a flowchart of an electronic device according to an embodiment. An electronic device 101 and/or a processor 210 of FIGS. 1 and 2 may perform operations described with reference to FIG. 3.

Referring to FIG. 3, in operation 310, according to an embodiment, a processor of the electronic device may display a plurality of visual objects. For example, the processor may display a visual object associated with one or more software applications on a display (e.g., a display 110 of FIGS. 1 and 2). Each of the plurality of visual objects of the operation 310 may include an icon representing a software application associated with the visual object. For example, each of the plurality of visual objects in the operation 310 may include icons and/or text corresponding to one or more software applications (e.g., a name and/or a package name of the one or more software applications). On the display, the processor may display a plurality of visual objects having positions aligned based on a two-dimensional grid. The processor may perform the operation 310 in a state that a launcher application 230 of FIG. 2 is executed. A state that the processor performs the operation 310 may include a state 191 of FIG. 1.

In an embodiment, the processor may display a list of software applications installed on the electronic device. In order to visualize at least a portion of the list, the processor may perform the operation 310. For example, the plurality of visual objects displayed by the operation 310 may correspond to at least a portion of the list of software applications. For example, the plurality of visual objects may correspond to each of a plurality of software applications included in the list.

Referring to FIG. 3, in operation 320, according to an embodiment, the processor of the electronic device may identify a first input indicating a selection of a first visual object among the plurality of visual objects. For example, the processor may identify the first input of the operation 320 based on identifying a long-touch gesture (e.g., a gesture for touching the first visual object for a period exceeding 1 second to 1.5 seconds) on the first visual object. The long-touch gesture may be identified by a processor that received sensor data of a touch sensor (e.g., a touch sensor 227 of FIG. 2) of the electronic device. The first input of the operation 320 is not limited to the long-touch gesture. The processor may identify the first input indicating selection of the first visual object among the plurality of visual objects based on the touch sensor. The processor that identified the first input may display the first visual object among the plurality of visual objects displayed based on the operation 310, according to a size larger than that of another visual object. The first input may be distinguished from an input to execute the application associated with the selected visual object. For example, the first input may be a touch on the visual object for more than a predetermined time, while the input for executing the associated application may be a touch on the visual object for less than a predetermined time. The embodiment is not limited thereto.

Referring to FIG. 3, in operation 330, according to an embodiment, the processor of the electronic device may change a position of a second visual object according to a second input in response to the second input indicating movement of the second visual object among the plurality of visual objects. The processor may identify the second input of the operation 330 based on identifying a drag gesture for the second visual object. The drag gesture may be identified from the sensor data of the touch sensor of the electronic device. The processor that identified the drag gesture may move the second visual object displayed in the display along a path of the drag gesture. Based on completion (or release) of the drag gesture, the processor may display the second visual object at a position on the display on which the drag gesture is completed. The first visual object of the operation 320 and the second visual object of the operation 330 may include visual objects 131, 132, and 133 of FIG. 1. The second input may occur whilst the first input is being made, or may occur after the first input. For example, the first input comprising a touch on the display having a duration of more than a predetermined time may be made, and then released. The second input comprising a drag gesture to move a second visual object from a first position to a second position may occur after the first input has been released. The second input may be initiated within a second predetermined time from the release of the first input.

In another example, the first input comprising a touch on the display having a duration of more than a predetermined time may be made. Whilst the touch is still in contact with the display, the second input may be performed. The first input may be released after the second input has been initiated, or after the release of the second input, or substantially at the same time as the release of the second input.

Referring to FIG. 3, in operation 340, according to an embodiment, the processor of the electronic device may identify whether the second visual object is at least partially overlapped with the first visual object by the second input. The processor may perform the operation 340 while the second visual object is moved by the second input. The processor may perform the operation 340 after the second input has been released. Identifying whether the second visual object at least partially overlaps the first visual object may comprise comparing coordinates of the second visual object in its second position with coordinates of the first visual object to determine whether any of the coordinates coincide. The processor that identified the second input including the drag gesture may move the second visual object along the path of the drag gesture. In case that a terminal point of the drag gesture is included in the first visual object or is located less than a specified distance from the first visual object, the processor may determine that the second visual object is at least partially overlapped with the first visual object. In case that the second visual object is at least partially overlapped with the first visual object (340-Yes), the processor may perform operation 350 of FIG. 3.

In an embodiment, the processor may perform operations 310, 320, 330, 340, 350, and 360 of FIG. 3 independently of the first input of the operation 320. For example, the processor may identify the second input of the operation 330 for changing a position of the second visual object without the first input of the operation 320. The processor that identified the second input independently of the first input may identify whether the second visual object is at least partially overlapped with the other visual object based on the operation 340. That is, at the end of the drag gesture on the second visual object, the processor may determine whether the new position of the second visual object at least partially overlaps a visual object displayed on the display. That is, it is not required for a first visual object to be explicitly selected before the conclusion of the drag gesture on the second visual object. The processor which identifies that the second visual object at least partially overlaps with the other visual object may perform the operation 350 of FIG. 3.

Referring to FIG. 3, in the operation 350, according to an embodiment, the processor of the electronic device may display a third visual object for displaying screens corresponding to the first visual object and the second visual object based on a multi-window. Based on identifying that the second visual object at least partially overlaps with the first visual object as a result of the second input, the processor may display the third visual object for simultaneously providing all of the screens corresponding to the first visual object and the second visual object. The third visual object may replace one or both of the first visual object and the second visual object on the display. The third visual object of operation 350 may include visual objects 141, 142, 143, and 144 of FIG. 1. Based on operation 350, the processor may display the third visual object in the list of software applications including the plurality of visual objects of the operation 310. The processor may display the third visual object based on the size of the other visual objects displayed on the display (e.g., the plurality of visual objects in operation 310). For example, the processor may display the third visual object based on a size of an image (e.g., icon) in the list that represents the software application. The size of the third visual object may be the same as the size of one or more of the visual objects that were displayed in operation 310.

In an embodiment, the third visual object displayed based on the operation 350 may include at least a portion of the first visual object of the operation 320 and the second visual object of the operation 340. In case that the first visual object includes a first icon for executing a first software application and the second visual object includes a second icon for executing a second software application, the third visual object of the operation 350 may include the first icon and the second icon. In case of displaying the third visual object having a size of the first visual object and the second visual object, the first icon and the second icon smaller than the size may be integrated in the third visual object. A positional relationship of the first icon and the second icon in the third visual object may represent the layout of screens to be displayed in the display by an input indicating selection of the third visual object. For example, the processor may display the third visual object including the first icon and the second icon that are arranged based on the position of the second visual object overlapped with the first visual object according to the second input.

Referring to FIG. 3, in the operation 360, according to an embodiment, the processor of the electronic device may display screens based on a layout corresponding to the position (or direction) of the second visual object overlapped with the first visual object by the second input in response to a third input indicating the selection of the third visual object. That is, in response to a third input to select the third visual object, the applications associated with the first and second visual objects may be executed, and an application screen for each of these executed applications may be displayed, wherein the application screens of the applications are displayed according to a layout indicated by the third visual object. The third input may include a tap gesture that taps the third visual object displayed on the display. The tap gesture may be identified based on the sensor data of the touch sensor (e.g., the touch sensor 227 of FIG. 2) connected to the processor.

In an embodiment, the processor that identified the third input of the operation 360 may execute software applications corresponding to each of the first visual object and the second visual object based on multi-tasking. The processor may arrange screens provided by the executed software applications based on the layout of the operation 360. For example, screens simultaneously displayed in the display by the operation 360 may have a positional relationship and/or layout represented by icons (e.g., icons corresponding to each of the first visual object and second visual object) included in the third visual object. The layout of the operation 360 may be associated with the position of the second visual object at least partially overlapping the first visual object after the dragging movement of the second input. The layout of the operation 360 may be identified among PBP and/or PIP.

In an embodiment, in case that the second visual object is not overlapped with the first visual object (340-No), the processor may change the position of the second visual object according to the second input. Referring to FIG. 2, in case that the second visual object moved by the second input is not overlapped with the first visual object, the third visual object for providing all screens corresponding to the first visual object and the second visual object may not be displayed. The first visual object remains in its original position whilst the position of the second visual object changes to a position corresponding to an end point of the second input.

Although the tap gesture and/or drag gesture have been described as examples of the first input to the third input, the embodiment is not limited thereto. In an embodiment, the electronic device may identify the first input to the third input described with reference to FIG. 3, based on at least one of a hand gesture, a direction of a gaze, and/or an utterance based on a natural language sentence. According to an embodiment, an electronic device (e.g., an electronic device 101-3 of FIG. 2) that performs the operation of FIG. 3 based on the hand gesture will be described with reference to FIGS. 12A to 12C.

Hereinafter, with reference to FIGS. 4A to 4C, screens displayed by the electronic device performing the operation of FIG. 3 will be described by way of example.

FIGS. 4A to 4C illustrate an example of an operation of an electronic device 101 displaying a visual object for providing a plurality of screens. An electronic device 101 of FIGS. 1 and 2 and/or a processor 210 of FIG. 2 may perform an operation of the electronic device 101 described with reference to FIGS. 4A to 4C. The operation of the electronic device 101 described with reference to FIGS. 4A to 4C may be associated with at least one of operations of FIG. 3.

Referring to FIGS. 4A to 4C, states 401, 402, 403, 404, 405, 406, 407, 408, 409, 410, and 411 of the electronic device 101 divided according to a screen displayed on a display 110 are illustrated. The electronic device 101 may display screens illustrated in FIGS. 4A to 4C in response to the execution of a launcher application 230 of FIG. 2. The electronic device 101 of FIGS. 4A to 4C may correspond to an electronic device 101-1 of FIG. 2.

Referring to FIG. 4A, in the state 401, the electronic device 101 may display a screen (e.g., a launcher screen and/or a home screen) for displaying a list of software applications in the display 110. In the state 401, the electronic device 101 may display visual objects 131 and 132 having a width w1 and a height h1. Each of the visual objects 131 and 132 may correspond to software applications installed in the electronic device 101. Each of the visual objects 131 and 132 may include an icon representing a software application corresponding to the visual object. Referring to FIGS. 4A to 4C, the operation of the electronic device 101 based on the visual object 131 corresponding to an email application and the visual object 132 corresponding to an alarm application is described, but the embodiment is not limited thereto.

In the state 401 of FIG. 4A, the electronic device 101 may identify a first input indicating a selection of the visual object 131. For example, in response to detecting a contact of an external object (e.g., a fingertip) on a display at a position p1 where the visual object 131 is displayed on the display, the contact lasting for a duration exceeding a designated period, the electronic device 101 may identify the first input. The electronic device 101 that identified the first input based on the position p1 in the state 401 may switch to the state 402.

Referring to FIG. 4A, in the state 402, in response to the first input indicating the selection of the visual object 131 based on the position p1, the electronic device 101 may enlarge the visual object 131 among a plurality of visual objects. For example, the electronic device 101 may display the visual object 131 having a width w2 exceeding the width w1 and a height h2 exceeding the height h1. While switching from the state 401 to the state 402, the visual object 131 may be enlarged with respect to a center point of the visual object 131. The electronic device 101 may provide a guide or an indication that the visual object 131 is to be used to generate a multi-window by enlarging the visual object 131.

In an embodiment, the visual object 131 may remain in the enlarged state while the external object is contacted on the visual object 131 for the first input. For example, in case that the external object is separated from the display 110, the electronic device 101 may reduce the width w2 and the height h2 of the visual object 131 to the width w1 and the height h1 of the visual object 131 in the state 401. The embodiment is not limited thereto. For example, after the visual object 131 is enlarged based on the first input, even after the first input is released, the electronic device 101 may maintain displaying the visual object 131 according to the width w2 and the height h2.

In the state 402 of FIG. 4A, the electronic device 101 may identify a second input indicating a movement of another visual object different from the enlarged visual object 131. For example, the electronic device 101 may identify the second input based on an external object contacted at a position p2 in a portion of the display 110 where the visual object 132 is displayed. The second input may include a gesture (e.g., a drag gesture) in which the external object contacted at the position p2 is moved out of a portion of the display 110 on which the visual object 132 is displayed in a state contacted with the display 110. In an embodiment, the electronic device 101 may identify the second input during a time period in which the first input is maintained. The embodiment is not limited thereto, and the electronic device 101 may identify the second input independently of whether the first input is maintained after the first input. An operation of the electronic device 101 with respect to the second input may be performed while the first input is maintained, or may be performed after the first input is completed. The first input is maintained whilst there is a contact of the external object on the visual object 131. The first input is completed when the contact of the external object on the visual object 131 ceases.

Referring to FIG. 4A, exemplary drag gestures starting at the position p2 and moving along different paths 421, 422, and 423 are illustrated. The electronic device 101 that identified the second input based on the drag gestures may move the visual object 132 in the display 110 based on any one of the paths 421, 422, and 423. For example, the electronic device 101 may display an animation such as that the visual object 132 follows an external object dragged on the display 110. According to an embodiment, based on identifying that the visual object 132 moved according to the second input is moved into an area formed in the display 110 based on the enlarged visual object 131, the electronic device 101 may display a visual object (or a visual cue or container) (e.g., visual objects 432, 442, and 452 of FIG. 4A) for guiding the area.

In the state 402 of FIG. 4A, the electronic device 101 that identified the second input for moving the visual object 132 to a position q1 adjacent to the visual object 131 along the path 421 may switch to the state 403. In the state 403, the electronic device 101 may display the visual object 432 for adjusting a layout of screens corresponding to the first visual object and the second visual object corresponding to each of the first input and the second input. Referring to FIG. 4A, the visual object 432 having a square shape of a rounded corner is illustrated, but the embodiment is not limited thereto. A ratio (e.g., an aspect ratio) between a width and a height of the visual object 432 displayed on the display 110 may correspond to a ratio between a width and a height of the display 110 and/or an active area. For example, the processor may display the visual object 432 representing the reduced display 110.

In the exemplary state 403 of FIG. 4A, the electronic device 101 that identified the visual object 132 moved to the position q1 adjacent to the visual object 131 along a -y direction of the display 110 may display the visual object 132 below the visual object 131 along the -y direction in the visual object 432. The visual objects 131 and 132 displayed side by side in the visual object 432 may indicate a layout of screens to be provided through a visual object 434 to be generated by the second input. In the state 403, the electronic device 101 that identified the visual object 132 moved to another position different from the position q1 by the second input may change a positional relationship of the visual objects 131 and 132 in the visual object 132 based on the other position of the visual object 132.

Referring to FIG. 4A, in the state 403 in which the visual object 132 is moved into the visual object 432, based on identifying a release of the second input for movement of the visual object 132 in a position of the visual object 432, the electronic device 101 may display the visual object 434 for providing a plurality of screens according to a layout corresponding to a position of the visual object 132 in the visual object 432. The visual object 434 may be displayed when the second input is released. For example, the electronic device 101 that identified the second input released from the position q1 may display the visual object 434 associated with the position and/or direction of the visual object 132 disposed in the visual object 432 based on the position q1. The embodiment is not limited thereto, and after identifying the release of the second input, the electronic device 101 may display the visual object 434 in response to detecting a tap gesture on a portion of the display 110 that is not occupied by an executable object. The portion of the display 110 that is not occupied by an executable object may be referred to as an empty area and/or an idle area. An input indicating selection of the idle area may be included in an input for completing (or stopping) selecting the plurality of screens.

Referring to FIG. 4A, the visual object 434 displayed based on the release of the second input in the state 403 may include images 436 and 438 corresponding to each of the visual objects 131 and 132. Based on the positional relationship of the visual objects 131 and 132 disposed along the -y direction, the electronic device 101 may display the visual object 434 including the images 436 and 438 disposed along the -y direction. Although the visual object 434 including a line located between the images 436 and 438 is illustrated as an example, the embodiment is not limited thereto. Each of the images 436 and 438 in the visual object 434 may be icons representing software applications corresponding to the visual objects 131 and 132. The electronic device 101 may display the visual object 434 having the width w1 and the height h1 of the visual object 131 in the state 401. The electronic device 101 may stop displaying at least one of the visual objects 131, 132, and 432 in the display 110 based on the release of the second input. The electronic device 101 may display the visual object 434 at the position of the visual object 131 corresponding to the first input, based on the release of the second input.

In the state 402 of FIG. 4A, the electronic device 101 that identified the second input for moving the visual object 132 to a position q2 adjacent to the visual object 131 along the path 422 may switch to the state 404. In the state 404, the electronic device 101 may display the visual object 442 having a shape of a square wrapping all of the visual objects 131 and 132. An aspect ratio of the visual object 442 may be matched to an aspect ratio of the display 110. In the visual object 442, the electronic device 101 may display the visual objects 131 and 132 based on a positional relationship of the position q2 and the visual object 131. In case that the visual object 132 is moved along the path 422 in a +y direction of the visual object 131, the electronic device 101 may display the visual object 132 on the visual object 131 along the +y direction in the visual object 442.

In the state 404 of FIG. 4A, the electronic device 101 that identified the release of the second input for the movement of the visual object 132 may display a visual object 444 for simultaneously providing screens corresponding to the visual objects 131 and 132. The electronic device 101 may display the visual object 444 having the width w1 and the height h1 in the launcher screen in response to the release of the second input. In an embodiment, the electronic device 101 may replace the visual object 131 in the launcher screen with the visual object 444. Based on the release of the second input, the electronic device 101 may hide at least one of the visual objects 131, 132, and 442 from the display 110 and may display the visual object 444. In the visual object 444, the electronic device 101 may arrange images 446 and 448 corresponding to each of the visual objects 131 and 132 based on the positional relationship of the visual objects 131 and 132 at the timing when the second input is released. An arrangement of the images 446 and 448 in the visual object 444 may indicate an arrangement of screens to be displayed in the display 110 based on an input associated with the visual object 444.

In the state 402 of FIG. 4A, the electronic device 101 that identified the second input for moving the visual object 132 to a position q3 adjacent to the visual object 131 along the path 423 may switch to the state 405. In the state 405, the electronic device 101 may display the visual object 452 including all of the visual objects 131 and 132. In case that the visual object 132 is moved in a +x direction of the visual object 131 along the path 423, the electronic device 101 may display the visual object 452 having the shape of the display 110 in a landscape mode. For example, a ratio of a width and a height of the visual object 452 may be matched to a ratio of a height and a width of the display 110 of the state 405. In the visual object 452, the electronic device 101 may display the visual object 132 on a left side of the visual object 131 along the +x direction.

In the state 405 of FIG. 4A, in case that the second input for the movement of the visual object 132 is released at the position q2 in the visual object 452, the electronic device 101 may display a visual object 454 for simultaneously providing the screens corresponding to the visual objects 131 and 132 in the visual object 452. A width w1 and a height h1 of the visual object 454 displayed by the electronic device 101 may be matched to the width w1 and the height h1 of the visual object 131 in the state 401. Based on the release of the second input, the electronic device 101 may stop displaying at least one of the visual objects 131, 132, and 452, and may display the visual object 454 at a position where the visual object 131 was displayed. The electronic device 101 may display the visual object 454 including images 456 and 458 associated with the visual objects 131 and 132. In the visual object 454, an arrangement of the images 456 and 458 may correspond to an arrangement of the visual objects 131 and 132 in the visual object 452 at the timing when the second input is released.

Referring to FIG. 4A, in an embodiment in which the height of the display 110 is longer than the width, the electronic device 101 may display the plurality of screens based on a portrait mode or the landscape mode. Based on an input to the visual objects 434 and 444 including images (e.g., the images 436, 438, 446, and 448) arranged along the vertical direction (e.g., the direction of the y axis) of the display 110, the electronic device 101 may display the plurality of screens in the portrait mode. Based on an input to the visual object 454 including the images 456 and 458 arranged along a direction of a second edge shorter than a first edge of the display 110, the electronic device 101 may display the plurality of screens in the landscape mode.

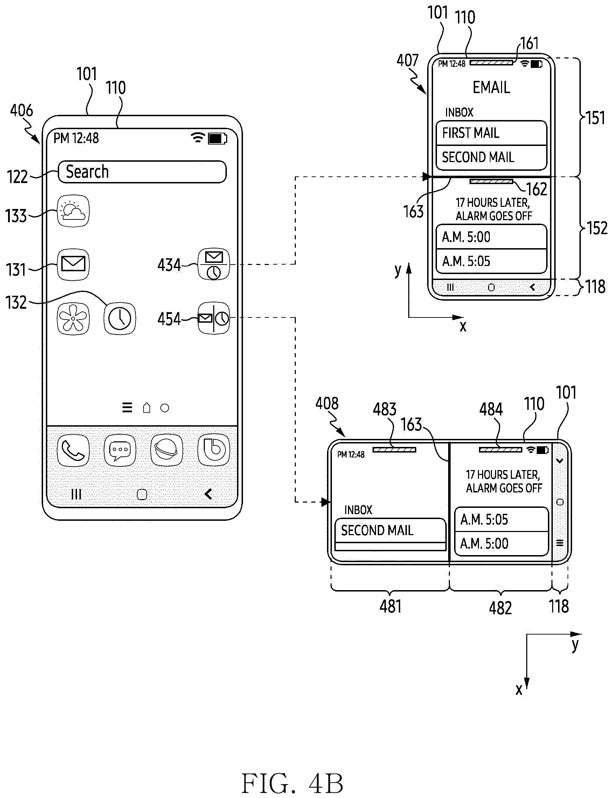

Referring to the states 403, 404, and 405 of FIG. 4A, a layout of the visual objects 434, 444, and 454 and/or the screen may be dependent on the position and/or the arrangement of the visual objects 131 and 132 in the visual cue. Referring to FIG. 4B, the exemplary state 406 that the visual objects 434 and 454 of FIG. 4A are displayed in the display 110 is illustrated. Referring to FIG. 4B, the electronic device 101 may display the visual objects 434 and 454 for executing a plurality of software applications at once together with visual objects (e.g., the visual objects 131 and 132) for executing one software application in the display 110.

In the state 406 of FIG. 4B, based on an input indicating selection of the visual object 434, the electronic device 101 may switch to the state 407. In the state 407, the electronic device 101 may display screens arranged along a vertical direction of the display 110 and provided from software applications represented by the visual object 434. For example, the electronic device 101 may display a second screen in a second area 152 below a first area 151 of the display 110 in which the first screen is displayed along the -y direction in the display 110. The electronic device 101 may display handles 161 and 162 for controlling positions and/or sizes of the first screen and the second screen on each of the areas 151 and 152. Through a boundary line 163 between the areas 151 and 152, the electronic device 101 may identify an input for adjusting a height, size, and/or extent (or area) of the areas 151 and 152.

In the state 406 of FIG. 4B, the electronic device 101 may switch to the state 408 in response to an input indicating the selection of the visual object 454. In the state 408, the electronic device 101 may display screens provided from software applications corresponding to the visual object 454 based on the landscape mode. For example, the electronic device 101 may display the first screen in a first area 481 of the display 110 and may display the second screen in a second area 482 on a right side of the first area 481 along the +y direction. In each of the areas 481 and 482, the electronic device 101 may display handles 483 and 484 for controlling the positions and/or sizes of the first screen and the second screen.

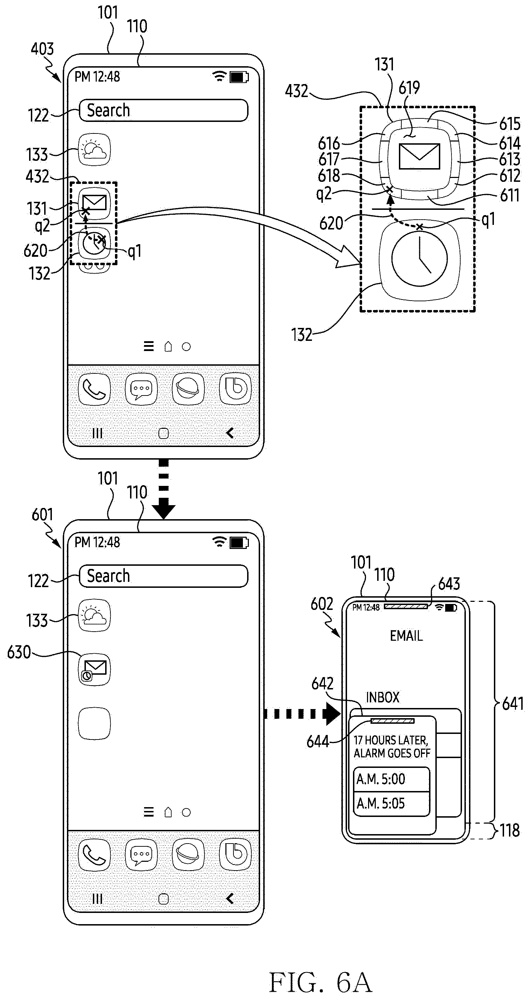

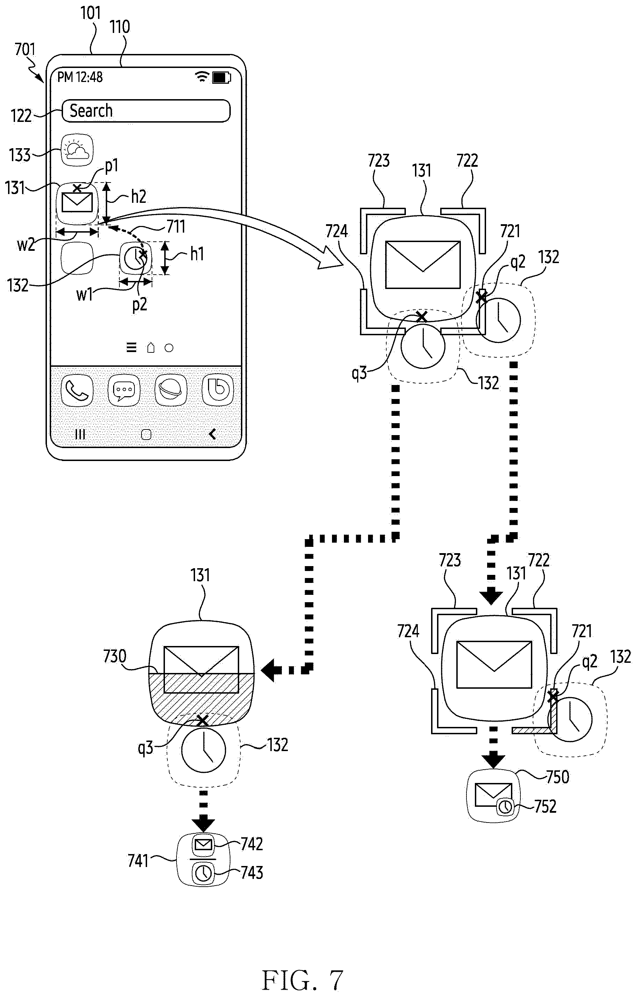

Referring to FIG. 4B, based on an input indicating a selection of any one of the visual objects 434 and 454, the electronic device 101 may display screens associated with a visual object corresponding to the input on each of portions (e.g., portions 151, 152, 481, and 482) of an active area of the display 110 segmented along a direction of an edge of the display 110. In the state 402 that the visual object 131 is enlarged in response to the first input, based on the second input moving the visual object 132 to a position (e.g., positions q1, q2, and q3) adjacent to the visual object 131, the electronic device 101 may display a visual object (e.g., visual objects 434, 444, and 454) for simultaneously displaying screens according to PBP. In the state 402, in case that the visual object 132 moves to a position at least partially overlapped with the visual object 131 according to the second input, the electronic device 101 may display a visual object for simultaneously displaying screens according to PIP and/or the PBP. An operation of the electronic device 101 based on the visual object 132 moved to the position at least partially overlapped with the visual object 131 will be described with reference to FIGS. 6A to 6B and/or 7.

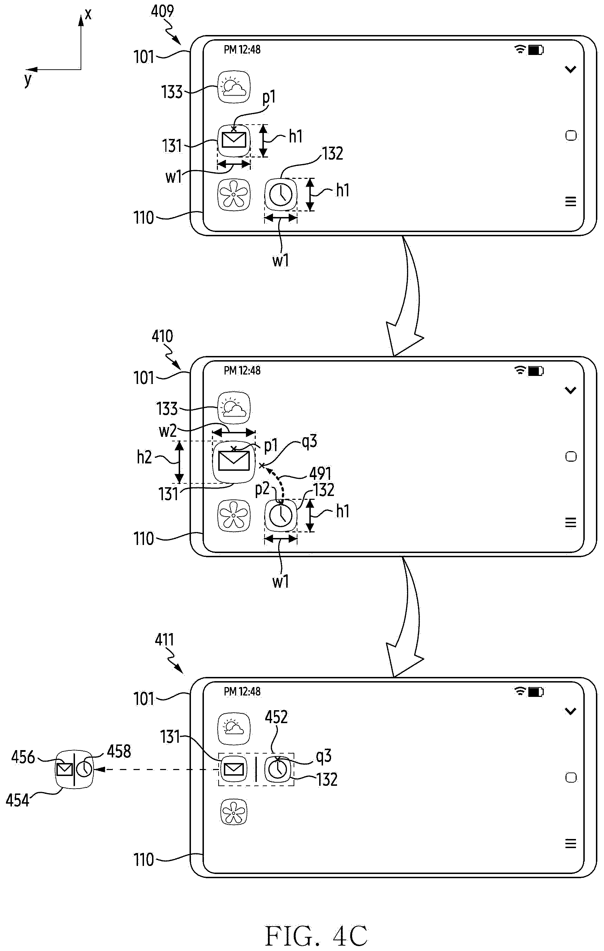

Referring to FIG. 4C, the states 409, 410, and 411 of the electronic device 101 divided according to a screen displayed on the display 110 are illustrated in the state 409 included in the landscape mode. In the state 409, the electronic device 101 may display a screen (e.g., the launcher screen and/or the home screen) for displaying a list of software applications in the display 110. In the screen, the electronic device 101 may display the visual objects 131, 132, and 133 having the width w1 and the height h1. The visual objects 131, 132, and 133 of FIG. 4C may correspond to the visual objects 131, 132, and 133 of FIG. 4A. For example, the electronic device 101 of FIG. 4A may be switched to the state 409 of FIG. 4C based on identifying a motion in which the display 110 and/or the electronic device 101 rotates 90 ° based on a direction of a normal line of the display 110.

In the state 409 of FIG. 4C, the electronic device 101 may identify the first input indicating the selection of the visual object 131. For example, based on an external object contacting the display 110 at the position p1 where the visual object 131 is displayed for at least a designated period (or predetermined length of time), the electronic device 101 may identify the first input. The electronic device 101 that identified the first input may switch from the state 409 to the state 410 of FIG. 4C.

In the state 410 of FIG. 4C, the electronic device 101 that identified the first input indicating the selection of the visual object 131 may enlarge the visual object 131 corresponding to the first input. As the visual object 131 is enlarged, the width w2 and the height h2 of the visual object 131 displayed in the state 410 of FIG. 4C may be greater than the width w1 and the height h1 of the other visual object (e.g., the visual object 132). By displaying the visual object 131 according to the width w2 and the height h2 greater than each of the width w1 and the height h1, the electronic device 101 may provide an indication to the user that the visual object 131 is in a state in which it may receive an additional input for generating a multi-window visual object.

In an embodiment, displaying the visual object 131 according to the width w2 and the height h2 may be maintained while the wearable device 101 receives the first input. For example, based on the release, termination and/or stop of the first input, the wearable device 101 may reduce the width w2 and the height h2 of the visual object 131 to the width w1 and the height h1. The embodiment is not limited thereto, and even after the first input is released, the wearable device 101 may maintain the width w2 and the height h2 of the visual object 131 for the designated period.

Referring to FIG. 4C, in the state 410 that the visual object 131 is enlarged, the electronic device 101 may identify the second input indicating the movement of the other visual object that is different from the visual object 131. For example, the electronic device 101 may identify the second input in response to the external object contacting at the position p2 in a portion of the display 110 where the visual object 132 is displayed. For example, the electronic device 101 may identify the second input moved from the position p2 to the position q3 adjacent to the visual object 131 along a path 491. Based on the second input, the electronic device 101 may change the position of the visual object 132 on the display 110. Based on identifying the visual object 132 moved to the position q3 in the area formed in the display 110 based on the visual object 131, the electronic device 101 may display the visual object 452 for guiding the area. Referring to FIG. 4C, the state 411 of the electronic device 101 that displayed the visual object 452 based on the second input is illustrated.

Referring to FIG. 4C, the electronic device 101 that identified the visual object 132 moved to the position q3 adjacent to the visual object 131 along the -y direction may display the visual object 452 having a shape and/or a size including all of the visual objects 131 and 132. The visual object 452 may have the shape and/or the aspect ratio of the display 110 of the landscape mode. In the state 411 of FIG. 4C, in case that the second input for the movement of the visual object 132 is released in the visual object 452, the electronic device 101 may display the visual object 454 for providing screens corresponding to the visual objects 131 and 132 grouped by the visual object 452 based on the multi-window. The visual object 454 of FIG. 4C and the images 456 and 458 included in the visual object 454 of FIG. 4C may correspond to the visual object 454 and the images 456 and 458 of FIG. 4A.

After the state 411 of FIG. 4C, the electronic device 101 displaying the visual object 454 on the display 110 may execute all of the software applications (e.g., the software applications corresponding to each of the images 456 and 458 in the visual object 454) indicated by the visual object 454 based on the landscape mode, in response to the input indicating the selection of the visual object 454. Based on the execution of the software applications, the electronic device 101 may display screens provided from the software applications based on the landscape mode. For example, in the landscape mode, the electronic device 101 may display the screens on different portions of the display 110. For example, the electronic device 101 may display the second screen to a left side of the first screen among the screens in the display 110 of the landscape mode.

FIGS. 5A to 5D illustrate an example of an operation of an electronic device 101-2 displaying a visual object for providing a plurality of screens. An electronic device 101 of FIGS. 1 and 2 and/or a processor 210 of FIG. 2 may perform the operation of the electronic device 101-2 described with reference to FIGS. 5A to 5D. The operation of the electronic device 101-2 described with reference to FIGS. 5A to 5D may be associated with at least one of the operations of FIG. 3.

Referring to FIGS. 5A to 5D, states 501, 502, 503, 504, 505, 506, and 507 of the electronic device 101-2 divided according to a screen shown on the display 110 are illustrated. The electronic device 101-2 of FIGS. 5A to 5D may correspond to the electronic device 101-2 of FIG. 2. For example, the electronic device 101-2 may include a first housing 591, a second housing 592, and a hinge assembly 593 for rotatably coupling the first housing 591 and the second housing 592. The display 110 of the electronic device 101-2 may be disposed on the first housing 591, the hinge assembly 593, and the second housing 592. The display 110 of the electronic device 101-2 may be referred to as a flexible display.

Referring to FIG. 5A, in the state 501 displaying a list of software applications, the electronic device 101-2 may display visual objects 511, 512, and 513 for executing different software applications. The visual objects 511, 512, and 513 may each have the same width w1 and height h1. In the state 501 of displaying the visual objects 511, 512, and 513 based on the launcher screen, a screen displayed by the electronic device 101-2 may be divided into different areas 112, 114, and 118. In the area 114 referred to as a workspace area, a launcher area, and/or a home area, the electronic device 101-2 may display a widget 514 together with icons representing software applications.

In the state 501 of FIG. 5A, the electronic device 101-2 may identify a first input indicating selection of the visual object 511. The first input may include a long-touch (or long-press) gesture for a position p1 of the display 110 where the visual object 511 is displayed. The electronic device 101-2 that identified the first input may switch to the state 502. While switching from the state 501 to the state 502, the electronic device 101-2 may enlarge the visual object 511 corresponding to the first input. For example, a width w2 and a height h2 of the visual object 511 in the state 502 may be greater than the width w1 and height h1 of the visual object 511 in the state 501. By enlarging the visual object 511, the electronic device 101-2 may guide that the electronic device 101-2 was switched to the state 502 for adding a new visual object for providing a plurality of screens including screens corresponding to the visual object 511 based on PBP and/or PIP. By enlarging the visual object 511, the electronic device 101-2 may more easily receive an additional input for a combination of screens.

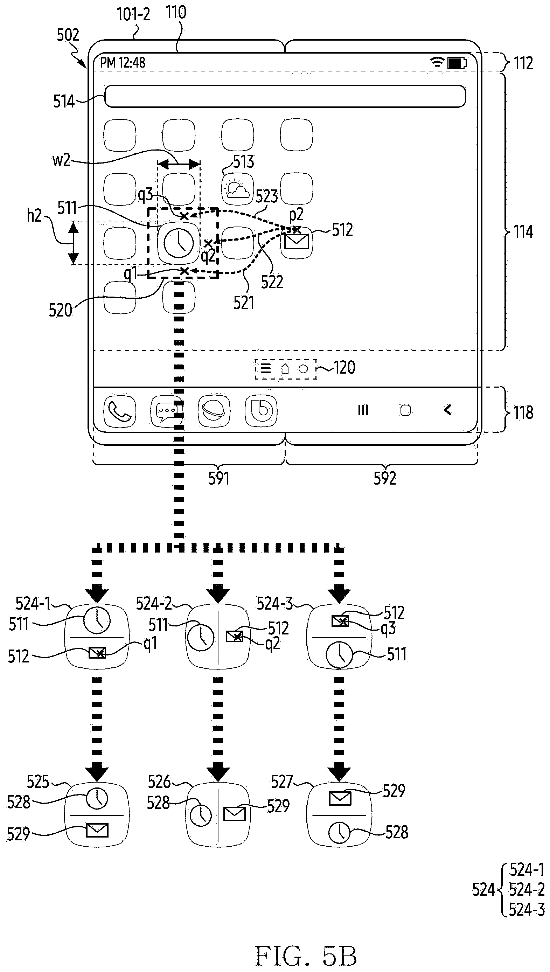

Referring to FIG. 5B, in the state 502 that the visual object 511 is enlarged, the electronic device 101-2 may identify a second input indicating movement of another visual object that is different from the visual object 511. For example, based on a drag gesture initiated from a position p2 on the display 110 where the visual object 512 is displayed, the electronic device 101-2 may identify the second input. In case that the visual object 512 is moved to an area 520 adjacent to the visual object 511 based on the second input, the electronic device 101-2 may display a visual object (e.g., visual objects 525, 526, and 527) for providing a combination of screens corresponding to the visual objects 511 and 512. A layout of screens to be included in the combination may be determined based on a position of the visual object 512 moved into the area 520.

Referring to FIG. 5B, the electronic device 101-2 that identified the visual object 512 moved into the area 520 based on the second input may display the visual object 524 for guiding the area 520. A ratio (e.g., an aspect ratio) between a width and a height of the visual object 524 may be matched to a ratio between a width and a height of the display 110. Referring to FIG. 5B, different examples of the second input are illustrated. Referring to FIG. 5B, the electronic device 101-2 that identified the visual object 512 moved from the position p2 to a position q1 in the area 520 along a path 521 may display the visual object 524-1 for guiding the area 520. The electronic device 101-2 may display the visual object 512 in the visual object 524-1 based on the position q1 with respect to the visual object 511. The electronic device 101-2 that identified the second input released from the position q1 may display a visual object 525 including images 528 and 529 associated with each of the visual objects 511 and 512 and arranged based on the position q1 with respect to the visual object 511. The electronic device 101-2 may display the visual object 525 having the width w1 and the height h1 of the other visual object that is different from the visual objects 511 and 512 in the launcher screen. In response to an input indicating selection of the visual object 525, the electronic device 101-2 may display a plurality of screens having a layout corresponding to an arrangement of the images 528 and 529 in the visual object 525, in the display 110.

Referring to FIG. 5B, the electronic device 101-2 that identified the visual object 512 moved from the position p2 to the position q2 in the area 520 along a path 522 may display a visual object 524-2 guiding the area 520. The electronic device 101-2 may determine positions of the visual objects 511 and 512 in the visual object 524-2 based on the position q2 with respect to the visual object 511. In case that the visual object 512 is moved to the position q2 adjacent to the visual object 511 along a horizontal direction (e.g., a direction of a second edge longer than a first edge of the display 110) of the display 110, the electronic device 101-2 may display the visual objects 511 and 512 arranged along the horizontal direction in the visual object 524-2. In response to the second input released from the position q2, the electronic device 101-2 may be arranged based on the position q2 and may display the visual object 526 including the images 528 and 529 corresponding to each of the visual objects 511 and 512. The visual object 526 may be displayed at a position where visual object 511 was displayed in the display 110. The embodiment is not limited thereto, and the electronic device 101-2 may display the visual object 526 on a portion of the display 110 not occupied by an executable object (e.g., an icon for executing a software application such as the visual object 513) in the launcher screen.

Referring to FIG. 5B, the electronic device 101-2 that identified the visual object 512 moved from the position p2 to a position q3 in the area 520 along a path 523 may display a visual object 524-3 guiding the area 520. The electronic device 101-2 may display the visual objects 511 and 512 arranged based on the position q3 in the visual object 524-3 while displaying the visual object 524-3 having an aspect ratio of the display 110. In case that the second input for moving the visual object 512 is released from the position q3, the electronic device 101-2 may add the visual object 527 for displaying screens having a layout corresponding to the position q3 with respect to the visual object 511 to the launcher screen. The visual object 527 may include the images 528 and 529 associated with each of the visual objects 511 and 512. In the visual object 527, a layout of the images 528 and 529 may correspond to a layout of screens to be displayed in the display 110 based on the visual object 527.

Referring to FIG. 5B, while the visual objects 511 and 512 are disposed in the visual object 524 representing the area 520, the electronic device 101-2 may generate or add a visual object (e.g., the visual objects 525, 526, and 527) for providing screens corresponding to the visual objects 511 and 512 in the visual object 524 based on an input indicating selection of an empty area (or an idle area) of the display 110.

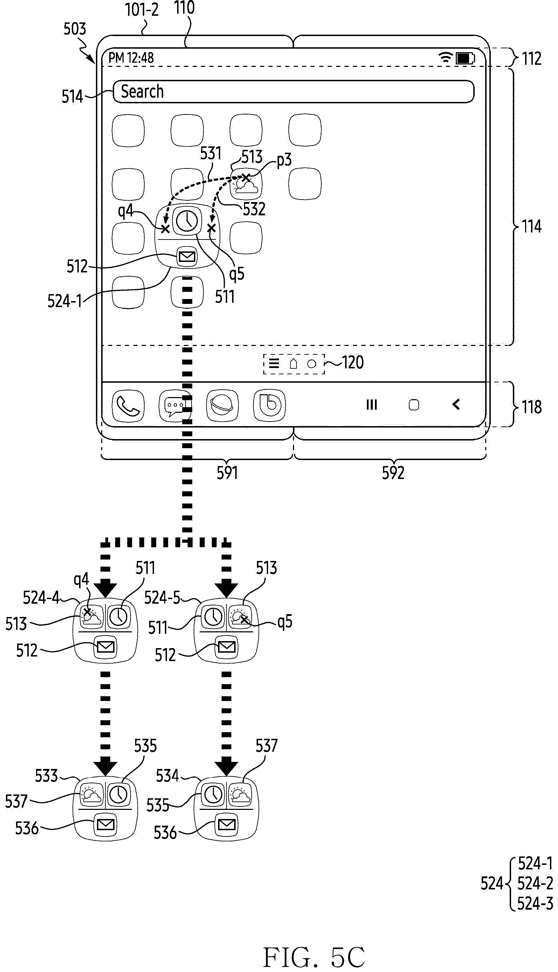

Although an operation of the electronic device 101-2 generating the visual objects 525, 526, and 527 for simultaneously providing two screens was described with reference to FIGS. 5A to 5B, the embodiment is not limited thereto. Referring to FIG. 5C, in the state 503 that the visual object 524-1 of FIG. 5B is displayed, the electronic device 101-2 may identify a third input for moving the visual object 513 located outside the visual object 524-1 into the visual object 524-1. According to an embodiment, the electronic device 101-2 may determine the layout for the plurality of screens based on a positional relationship of the visual objects 511 and 512 included in the visual object 524-1 and the visual object 513 moved into the visual object 524-1 by the third input.

Referring to FIG. 5C, in the state 503 of displaying visual object 524-1 including the visual objects 511 and 512 arranged along a vertical direction (e.g., the direction of the first edge, among the first edge or the second edge shorter than the first edge of the display 110) of the display 110, based on the third input for moving the visual object 513 to a position q4 in the visual object 524-1 along a path 531, the electronic device 101-2 may display a visual object 524-4 including the visual objects 511, 512, and 513. In the visual object 524-4, the visual objects 511 and 512 may be arranged based on the position q4 of the visual object 513 moved by the third input. Based on the visual object 513 moved to the position q4 in the visual object 524-4 based on the third input, the electronic device 101-2 may display a visual object 533 for providing three screens corresponding to the visual objects 511, 512, and 513. The visual object 533 may include images 535, 536, and 537 corresponding to the visual objects 511, 512, and 513 included in the visual object 524-4. A positional relationship of the images 535, 536, and 537 in the visual object 533 may correspond to a positional relationship of the visual objects 511, 512, and 513 in the visual object 524-4.

Referring to FIG. 5C, in the state 503, based on the third input indicating moving the visual object 513 to a position q5 in the visual object 524-1 along a path 532, the electronic device 101-2 may display an object 524-5 including the visual objects 511, 512, and 513. The electronic device 101-2 may display a visual object 524-5 including the visual objects 511, 512, and 513 arranged based on the position q5. After displaying the visual object 524-5, based on the input indicating the selection of the empty area (or the idle area) of the display 110, the electronic device 101-2 may display a visual object 534 for providing a plurality of screens having a layout corresponding to an arrangement of the visual objects 511, 512, and 513 in the visual object 524-5. In the visual object 534, the electronic device 101-2 may display the images 535, 536, and 537 representing each of the visual objects 511, 512, and 513. An arrangement of the images 535, 536, and 537 in the visual object 534 may match the arrangement of the visual objects 511, 512, and 513 in the visual object 524-5. The arrangement of the images 535, 536, and 537 in the visual object 534 may correspond to the layout of the screens to be displayed in the display 110 by the input indicating the selection of the visual object 534.

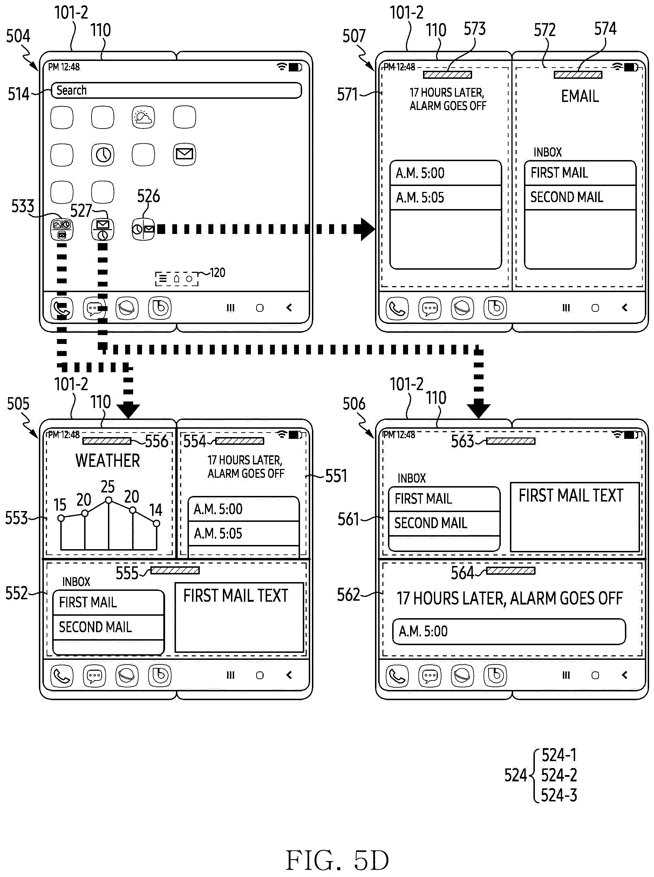

Referring to FIG. 5D, the exemplary state 504 of the electronic device 101-2 displaying the visual objects 526, 527, and 533 described with reference to FIGS. 5A to 5C is illustrated. The visual objects 526, 527, and 533 may have the same size as another visual object (or icon) in the launcher screen displayed through the display 110.

In the state 504 of FIG. 5D, in response to an input indicating selection of the visual object 533, the electronic device 101-2 may switch to the state 505. In the state 505, the electronic device 101-2 may simultaneously execute software applications corresponding to the visual object 533. Based on the software applications executed simultaneously, the electronic device 101-2 may display screens provided from the software applications in the display 110. In the state 505, a layout of screens displayed in the display 110 may correspond to an arrangement of images and/or icons included in the visual object 533. For example, based on an input to the visual object 533 including icons (or images) representing each of a weather application, an alarm application, and an email application, the electronic device 101-2 may display screens provided from the weather application, the alarm application, and the email application on the display 110. In the display 110, a positional relationship of a first area 551 in which a third screen provided from the alarm application is displayed, a second area 552 in which a second screen provided from the email application is displayed, and a third area 553 in which a first screen provided from the alarm application is displayed may be matched to a positional relationship in the visual object 533 of an icon representing the alarm application, an icon representing the email application, and an icon representing the alarm application. In each of the areas 551, 552, and 553, the electronic device 101-2 may display handles 554, 555, and 556 for adjusting a position and/or a size of the areas 551, 552, and 553.

In the state 504 of FIG. 5D, in response to an input indicating selection of the visual object 527, the electronic device 101-2 may switch to the state 506. In case that icons representing each of the email application and the alarm application are arranged along the vertical direction of the display 110 in the visual object 527, the electronic device 101-2 may display the screens provided from the email application and the alarm application side by side along the vertical direction in the display 110. For example, with respect to a first area 561 in which the first screen provided from the email application is displayed, a second area 562 in which the second screen provided from the alarm application is displayed may be located below the first area 561 along the vertical direction in the display 110. In each of the areas 561 and 562, the electronic device 101-2 may display handles 563 and 564 for adjusting a position and/or a size of the areas 561 and 562.

In the state 504 of FIG. 5D, in response to an input indicating selection of the visual object 526, the electronic device 101-2 may switch to the state 507. Based on the input to the visual object 526 in which icons corresponding to the different software applications (e.g., the email applications and the alarm applications) are arranged along the horizontal direction of the display 110, the electronic device 101-2 may switch to the state 507 that the screens provided from the software applications are arranged along the horizontal direction in the display 110. Referring to the state 504 of FIG. 5D, a screen provided from the email application may be displayed in a second area 572 distinct from a first area 571 of the display 110 occupied by the alarm application. In the state 507 of displaying screens provided from different software applications through areas 571 and 572 that are not overlapped each other, the electronic device 101-2 may display handles 572 and 574 for adjusting a position and/or a size of the areas 571 and 572.

As described above, according to an embodiment, the electronic device 101-2 may generate and/or add a visual object (e.g., the visual objects 525, 526, 527, 533, and 534) for simultaneously providing two or more screens. Based on a position, a direction, and/or a path of the drag gesture for combining visual objects (e.g., the visual objects 511, 512, and 513) corresponding to the screens, the electronic device 101-2 may adjust a layout of the screens. In an embodiment, the electronic device 101-2 may execute a function for organizing the software applications based on the launcher screen. For example, the electronic device 101-2 may support a function for generating, editing, and/or removing a folder capable of accommodating one or more software applications. Hereinafter, an operation of the electronic device 101 for generating any one of a visual object for a folder or a visual object for a multi-window by using a position and/or a direction in which visual objects overlap will be described with reference to FIGS. 6A to 6B.

FIGS. 6A to 6B illustrate an example of an operation of an electronic device 101 based on positions of visual objects 131 and 132 overlapping each other. The electronic device 101 of FIGS. 1 and 2 and/or a processor 210 of FIG. 2 may perform an operation of the electronic device 101 described with reference to FIGS. 6A to 6B. The operation of the electronic device 101 described with reference to FIGS. 6A to 6B may be associated with at least one of operations of FIG. 3.

Referring to FIGS. 6A to 6B, states 403, 601, 602, and 603 of the electronic device 101 divided according to a screen illustrated on a display 110 are illustrated. The state 403 of FIGS. 6A to 6B may correspond to the state 403 of FIG. 4A. Referring to FIG. 6A, a drag gesture for moving a visual object 132 of a position q1 adjacent to a visual object 131 to a position q2 on the visual object 131 along a path 620 is exemplarily illustrated. According to an embodiment, the electronic device 101 may determine a layout of screens corresponding to the visual objects 131 and 132 based on the visual object 132 moved to the position q2 overlapped with the visual object 131 by the drag gesture. The electronic device 101 may generate a visual object 630 for providing the screens based on the determined layout.

Referring to FIG. 6A, the electronic device 101 identified the visual object 132 moved to the position q2 overlapped with the visual object 131 may determine the layout of the screens corresponding to the visual objects 131 and 132 by comparing the areas 611, 612, 613, 614, 616, 617, 618, and 619 formed on the visual object 131 and the position q2. Referring to FIG. 6A, the areas 611, 612, 613, 614, 616, 617, 618, and 619 formed on the visual object 131 having a rectangular shape having a rounded corner are exemplarily illustrated. Each of the areas 612, 614, 616, and 618 may include each of corners (e.g., the rounded corner) of the visual object 131. Each of the areas 611, 613, 615, and 617 may include each of edges connecting the corners. The area 619 may correspond to an inner region of the visual object 131 divided by the corners and the edges. For example, the areas 611, 612, 613, 614, 615, 616, 617, and 618 other than the area 619 may be formed a boundary line of the visual object 131.

Referring to FIG. 6A, the electronic device 101 that identified the visual object 132 moved to any one of the areas 611, 612, 613, 614, 615, 616, 617, and 618 formed along the boundary line of the visual object 131 may display a visual object (e.g., the visual object 630) for providing screens associated with the visual objects 131 and 132 based on a layout corresponding to a positional relationship of the visual objects 131 and 132. For example, the electronic device 101that identified the visual object 132 moved to the areas 611, 613, 615, and 617 corresponding to edges of the visual object 131 may display a visual object for providing screens having a layout of the PBP. For example, in case that the visual object 132 and/or the position q2 where the visual object 132 is moved is overlapped with or included in an area (e.g., the area 611) corresponding to the edge connecting the corners of the visual object 131, the electronic device 101 may generate a visual object for displaying screens associated with the visual objects 131 and 132 side by side based on a positional relationship of the area with respect to the visual object 131.

In an embodiment, the electronic device 101 that identified the visual object 132 overlapped with areas 612, 614, 616, and 618 corresponding to the corners of the visual object 131 may display a visual object for providing screens having a layout of PIP. In the state 403 of FIG. 6A, the electronic device 101 that identified an input for moving the visual object 132 to the position q2 in the area 618 along the path 620 may generate the visual object 630 for displaying a second screen corresponding to the visual object 132, superimposed on a position adjacent to a corner corresponding to the area 618 in a first screen corresponding to the visual object 131. The electronic device 101 that identified the visual object 132 moved to the position q2 may change a color of the area 618 including the position q2 to a color different from a color of the other areas 611, 612, 613, 614, 615, 616, 617, and 619. In the state 601 after identifying the input, the electronic device 101 may display the generated visual object 630 in the display 110. For example, based on identifying that visual object 132 is overlapped on the corner (e.g., the corner corresponding to the area 618) of the visual object 131 according to an input including a drag gesture performed along the path 620, the electronic device 101 may display the visual object 630 for displaying the second screen, superimposed on the first screen.

Referring to FIG. 6A, the visual object 630 may include a first image corresponding to the first screen. The visual object 630 may include a second image having a size smaller than that of the first image and corresponding to the second screen. A positional relationship of the first image and the second image may correspond to the positional relationship of the visual object 131 and the area 618. For example, the second image may be located adjacent to the corner of the first image corresponding to the corner of the visual object 131 included in the area 618. The embodiment is not limited thereto, and the second image may be overlapped on the corner of the first image corresponding to the corner of the visual object 131 included in the area 618 in the visual object 630. In response to an input indicating selection of the visual object 630, the electronic device 101 may display a screen associated with the second image, superimposed on a screen associated with the first image, at a position adjacent to the corner of the display 110 corresponding to the corner of the first image in which the second image is overlapped.

In the state 601 of FIG. 6A, in response to the input indicating the selection of the visual object 630, the electronic device 101 may switch to the state 602. In the state 602 for displaying a plurality of screens associated with the visual object 630, the electronic device 101 may display the first screen among the plurality of screens based on a size of an active area of the display 110. The first screen may be provided from a software application corresponding to the visual object 131. The electronic device 101 may display the second screen among the plurality of screens, superimposed on the first screen displayed in the active area of the display 110. The second screen may be provided from a software application corresponding to the visual object 132. For example, in response to the input indicating the selection of the visual object 630, the electronic device 101 may display the second screen superimposed on the first screen occupying an entire active area of the display 110.

Referring to FIG. 6A, in the state 602 that the plurality of screens are displayed based on the visual object 630, portions 641 and 652 on which the plurality of screens are displayed may be at least partially overlapped. The portion 641 on which the first screen is displayed among the plurality of screens may correspond to the entire area of the active area of the display 110. A portion 642 on which the second screen is displayed among the plurality of screens may have a size smaller than that of the portion 641. Since the second screen is displayed on the portion 642 overlapped on the portion 641, at least a portion of the first screen may be covered by the second screen. The electronic device 101 may display handles 643 and 644 for adjusting a position and/or a size of each of the portions 641 and 642 on each of the portions 641 and 642.

As described above, according to an embodiment, the electronic device 101 may support a function for generating and/or adding a visual object (e.g., the visual object 630 of FIG. 6A) for providing the plurality of screens by using the PBP and/or the PIP, based on the areas 611, 612, 613, 614, 615, 617, and 618 formed along a boundary of the visual object 131. Based on the area 619 corresponding to the inner region of the visual object 131, the electronic device 101 may support a function for generating and/or adding a folder.

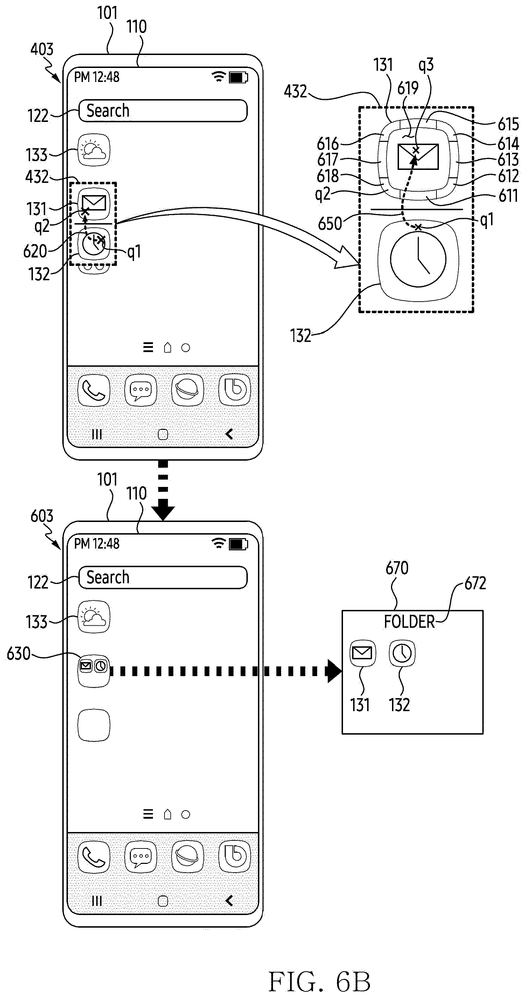

Referring to FIG. 6B, in the state 403, the electronic device 101 that identified the input for moving the visual object 132 to a position q3 in the area 619 spaced apart from the boundary line of the visual object 131 along a path 650 may generate a folder including the visual objects 131 and 132. The electronic device 101 that identified the input may display a visual object 660 representing the folder, by switching from the state 403 to the state 603. The electronic device 101 may display the visual object 660 based on the position of the visual object 131 in the display 110. The visual object 660 may include images (or icons) associated with the visual objects 131 and 132. The visual object 660 may have the same size as another visual object (e.g., a visual object 133 corresponding to a weather application) displayed together with the visual object 660 in the display 110.

According to an embodiment, the electronic device 101 may generate a directory including all software applications corresponding to the visual objects 131 and 132 in a memory (e.g., a memory 215 of FIG. 2) based on identifying a release of the input for moving the visual object 132 after the visual object 132 is moved into the visual object 131 along the path 650. The visual object 660 of FIG. 6B may correspond to the directory.

Referring to FIG. 6B, in the state 603 of displaying the visual object 660 corresponding to the folder (or the directory) including the visual objects 131 and 132, in response to the input indicating the selection of the visual object 660, the electronic device 101 may display a visual object 670 for displaying a list of software applications included in the folder on at least a portion of the display 110. In the visual object 670, the electronic device 101 may display text 672 assigned to the folder (or the directory). In the visual object 670, the electronic device 101 may display the visual objects 131 and 132 representing each of the software applications included in the folder. In response to an input indicating selection of any one of the visual objects 131 and 132, the electronic device 101 may execute one software application associated with the input. The electronic device 101 may display a screen provided from the executed software application based on a size of the active area of the display 110.

As described above, according to an embodiment, as icons (e.g., the visual objects 131 and 132) corresponding to different software applications are overlapped by a user input, the electronic device 101 may generate a folder including the software applications or may generate a visual object for providing a multi-window based on the software applications. Based on a position and/or a direction in which the icons overlap, the electronic device 101 may selectively generate any one of the folder or the visual object.

FIG. 7 illustrates an example of an operation of the electronic device 101 based on a position of the visual objects 131 and 132 overlapping each other. The electronic device 101 of FIGS. 1 and 2 and/or a processor 210 of FIG. 2 may perform the operation of the electronic device 101 described with reference to FIG. 7. The operation of the electronic device 101 described with reference to FIG. 7 may be associated with at least one of operations of FIG. 3.

Referring to FIG. 7, an exemplary state 701 of the electronic device 101 that identified a first input indicating selection of a visual object 131 is illustrated while the visual objects 131 and 132 corresponding to software applications are displayed. For example, the first input may include a long-touch gesture for a position p1 of a display 110 on which the visual object 131 is displayed. Based on the first input, the electronic device 101 may display the visual object 131 based on a width w1 and a height h2 exceeding a width w1 and a height h1 of another visual object 132.

In the state 701 of FIG. 7, the electronic device 101 may identify a second input indicating movement of the visual object 132. The second input may include a drag gesture initiated at a position p2 of the display 110 on which the visual object 132 is displayed and performed along a path 711. Based on the second input, the electronic device 101 may move the visual object 132 displayed in the display 110 along the path 711. According to an embodiment, the electronic device 101 may determine a layout of screens corresponding to the visual objects 131 and 132 based on a position and/or a direction of the visual object 132 overlapped with the visual object 131 according to the second input. The electronic device 101 may generate and add a visual object for displaying the screens based on the determined layout.

Referring to FIG. 7, the electronic device 101 that identified the visual object 132 moved to a position q3 on an edge of the visual object 131 along the path 711 may display a visual object 730 covering a portion of the visual object 131 including the position q3. The visual object 730 may be referred to as a visual cue for guiding the layout of screens corresponding to the visual objects 131 and 132. By using the visual object 730, the electronic device 101 may guide or indicate that the screens will be displayed based on a shape of the visual object 131 divided by the visual object 730.

Referring to FIG. 7, in response to a release of the second input for moving the visual object 132 in a state that the visual object 730 is displayed based on the visual object 132 moved to the position q3, the electronic device 101 may display a visual object 741 for displaying screens corresponding to the visual objects 131 and 132. The electronic device 101 may display the visual object 741 having the width w1 and the height h1 in the display 110. The electronic device 101 may display the visual object 741 including images 742 and 743 corresponding to the visual objects 131 and 132. In the visual object 741, the image 742 corresponding to the visual object 131 may have a position corresponding to the portion of the visual object 131 that is not overlapped with the visual object 730. In the visual object 741, the image 743 corresponding to the visual object 132 may have the position corresponding to the portion of the visual object 131 overlapped with the visual object 730. In response to an input indicating selection of the visual object 741, the electronic device 101 may display a plurality of screens having a layout corresponding to an arrangement of the images 742 and 743 in the display 110. For example, the electronic device 101 may display screens having a layout of PBP based on the arrangement of the images 742 and 743.

Referring to FIG. 7, the electronic device 101 that identified the visual object 132 moved to a position q2 in the area 721 corresponding to a corner of the visual object 131 along the path 711 may emphasize the area 721. For example, among areas 721, 722, 723, and 724 corresponding to each corner of the visual object 131, the electronic device 101 may display a color of the area 721 in a color different from a color of the other areas 721, 722, and 723. In response to a release of a drag gesture for moving the visual object 132 in a state of identifying the visual object 132 moved to the position q2, the electronic device 101 may display a visual object 750 for displaying screens corresponding to the visual objects 131 and 132. The electronic device 101 may display the visual object 750 for displaying the screens based on a layout associated with the position q2 with respect to the visual object 131. The visual object 750 may include the visual object 131 and an image 752 overlapped on the visual object 131. The image 752 may include an icon of a software application corresponding to the visual object 132. A position of the image 752 in the visual object 750 may correspond to the position q2 of the visual object 132 overlapped with the visual object 131.

In an embodiment, in response to an input indicating selection of the visual object 750, the electronic device 101 may display screens having a layout of the PIP. For example, the electronic device 101 may display a first screen corresponding to the visual object 131 based on a size of the display 110 and may display a second screen corresponding to the visual object 132 at a position adjacent to the corner of the display 110 corresponding to the corner of the visual object 131 associated with the position q2.

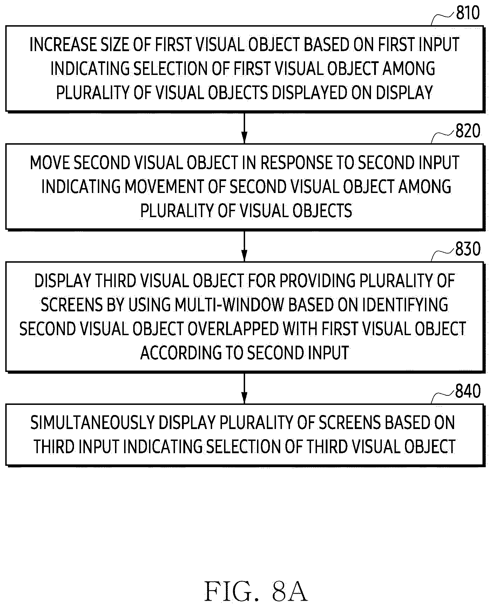

Hereinafter, an operation of the electronic device 101 for generating and adding visual objects (e.g., visual objects 434, 444, 454, 525, 526, 527, 533, 534, 630, 741, and 750) described with reference to FIGS. 4A to 7 will be described with reference to FIGS. 8A to 8E.

FIGS. 8A to 8E illustrate an example of a flowchart of an electronic device according to an embodiment. An electronic device 101 and/or a processor 210 of FIGS. 1 to 2 may perform operations described with reference to FIGS. 8A to 8E. The operation of the electronic device described with reference to FIGS. 8A to 8E may be associated with an operation of the electronic device 101 described with reference to FIGS. 3 to 7.

Referring to FIG. 8A, in operation 810, according to an embodiment, a processor of the electronic device may increase a size of a first visual object based on a first input indicating selection of the first visual object among a plurality of visual objects displayed on a display. The first input may include a tap gesture identified by a touch sensor (e.g., a touch sensor 227 of FIG. 2) of the electronic device. A state 402 that the visual object 131 of FIG. 4A is enlarged and/or a state 502 that the visual object 511 of FIG. 5A is enlarged may be an exemplary state of the electronic device in which the operation 810 is performed. Based on the operation 810, the processor may display the size of the first visual object to be larger than a size of other visual objects.

Referring to FIG. 8A, in operation 820, according to an embodiment, the processor of the electronic device may move a second visual object in response to a second input indicating movement of the second visual object among the plurality of visual objects. The second input of the operation 820 may include a drag gesture on the second visual object. Drag gestures performed along paths 421, 422, and 423 of FIG. 4A, drag gestures performed along paths 521, 522, and 523 of FIG. 5B, drag gestures performed along paths 531 and 532 of FIG. 5C, drag gestures performed along paths 620 and 650 of FIGS. 6A to 6B, and/or drag gestures performed along a path 711 of FIG. 7 may be included in the second input of the operation 820. While identifying the second input including the drag gesture, the processor may move the second visual object along the path of the drag gesture.

Referring to FIG. 8A, in operation 830, according to an embodiment, the processor of the electronic device may display a third visual object for providing a plurality of screens by using a multi-window based on identifying the second visual object overlapped with the first visual object according to the second input. The processor may determine a layout of the plurality of screens to be provided through the third visual object by using a position and/or a direction in which the second visual object is overlapped on the first visual object. The third visual object displayed based on the operation 830 may include visual objects 434, 444, and 454 of FIG. 4A, visual objects 525, 526, and 527 of FIG. 5B, visual objects 533 and 534 of FIG. 5C, a visual object 630 of FIG. 6A, and/or visual objects 741 and 750 of FIG. 7. The third visual object displayed based on the operation 830 may have a size of the first visual object before having an increased size based on the operation 810. In the third visual object, the processor may display thumbnails (or a reduced image) for the first visual object and the second visual object based on a position where the second visual object is overlapped on the first visual object.

Referring to FIG. 8A, in operation 840, according to an embodiment, the processor of the electronic device may simultaneously display the plurality of screens based on a third input indicating selection of the third visual object. States 407 and 408 of FIG. 4B, states 505, 506, and 507 of FIG. 5D, and/or a state 602 of FIG. 6A may be an example of a state of the electronic device that performed the operation 840. The processor may display the plurality of screens of the operation 840 based on a layout corresponding to an overlapping relationship between the first visual object and the second visual object of the operation 830. The layout may be determined from among portions (e.g., portions 151, 152, 481, and 482 of FIG. 4B) where the plurality of screens do not overlap each other in the display (e.g., a display 110 of FIGS. 1 and 2), PBP for displaying screens on portions 551, 552, 553, 561, 562, 571, and 572 of FIG. 5D, and PIP in which any one of the plurality of screens is overlapped with the other.

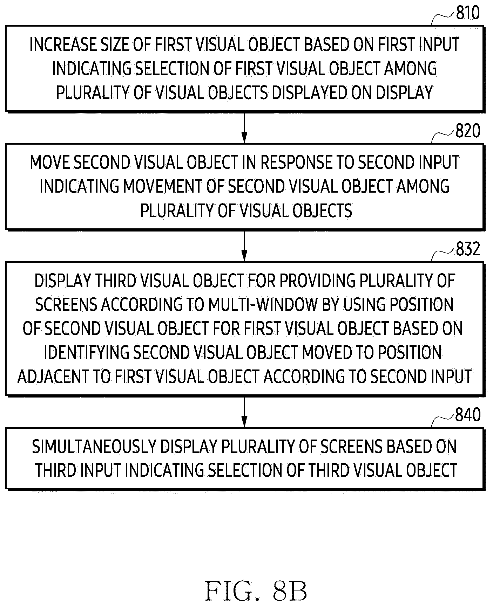

Hereinafter, an operation of the electronic device for the third visual object of the operations 830 and 840 will be described with reference to FIGS. 8B to 8E. In a description of FIGS. 8B to 8E, a description that overlap with the operations and/or a description of FIG. 8A may be omitted.

Referring to FIG. 8B, in operation 832 after the operations 810 and 820 of FIG. 8A, according to an embodiment, the processor of the electronic device may display the third visual object for providing the plurality of screens according to the multi-window by using a position of the second visual object for the first visual object based on identifying the second visual object moved to a position adjacent to the first visual object according to the second input. Based on the second visual object moved to the position adjacent to the first visual object, the processor may display a visual cue (e.g., visual objects 432, 442, and 452 of FIG. 4A, a visual object 524 of FIGS. 5B to 5C, and the visual object 432 of FIGS. 6A to 6B) for guiding generation of the third visual object. Based on a positional relationship of the first visual object and the second visual object in the visual cue, the processor may determine the layout of the plurality of screens to be displayed by an input to select the third visual object. A state 406 of FIG. 4B, a state 504 of FIG. 5D, and/or states 601 and 603 of FIGS. 6A and 6B may be an example of a state of the electronic device that performed the operation 832.

Referring to FIG. 8B, in the operation 840, according to an embodiment, the processor of the electronic device may simultaneously display the plurality of screens based on the third input indicating the selection of the third visual object displayed based on the operation 832. The processor that performed the operation 840 of FIG. 8B may display the plurality of screens located based on the PBP on the display.

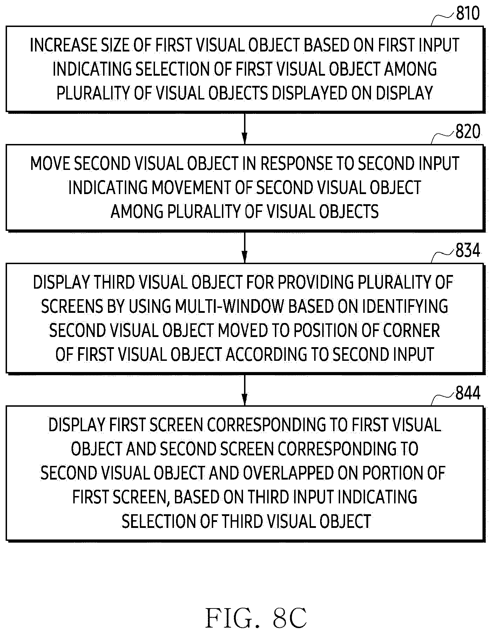

Referring to FIG. 8C, in the operation 834 after the operations 810 and 820 of FIG. 8A, according to an embodiment, the processor of the electronic device may display the third visual object for providing the plurality of screens by using the multi-window based on identifying the second visual object moved to a position of a corner of the first visual object according to the second input. The second input moving the second visual object to the position of the corner of the first visual object in operation 834 may include a drag gesture performed along a path 620 of FIG. 6A and/or a drag gesture for moving the visual object 132 to a position q2 along a path 711 of FIG. 7. The third visual object of FIG. 8C may include the visual object 630 of FIG. 6A and/or the visual object 750 of FIG. 7. The third visual object of FIG. 8C may be generated to display a plurality of screens having a layout of the PIP based on a corner of a display corresponding to the corner.

Referring to FIG. 8C, in operation 844, according to an embodiment, the processor of the electronic device may display a first screen corresponding to the first visual object and a second screen corresponding to the second visual object and overlapped on a portion of the first screen, based on the third input indicating the selection of the third visual object. The first screen may be displayed based on execution of a software application corresponding to the first visual object. The second screen may be displayed based on execution of a software application corresponding to the second visual object. The processor may display the first screen having a size of the active area of the display and may display the second screen superimposed on the first screen. The processor may display the second screen at a position that overlapped to a corner of the display corresponding to the corner of the first visual object of the operation 834 or is adj acent to the corner of the display. In the display, a width and a height of the first screen may be greater than a width and a height of the second screen. Based on the operation 844, the processor may display the first screen and the second screen having the layout of the PIP.

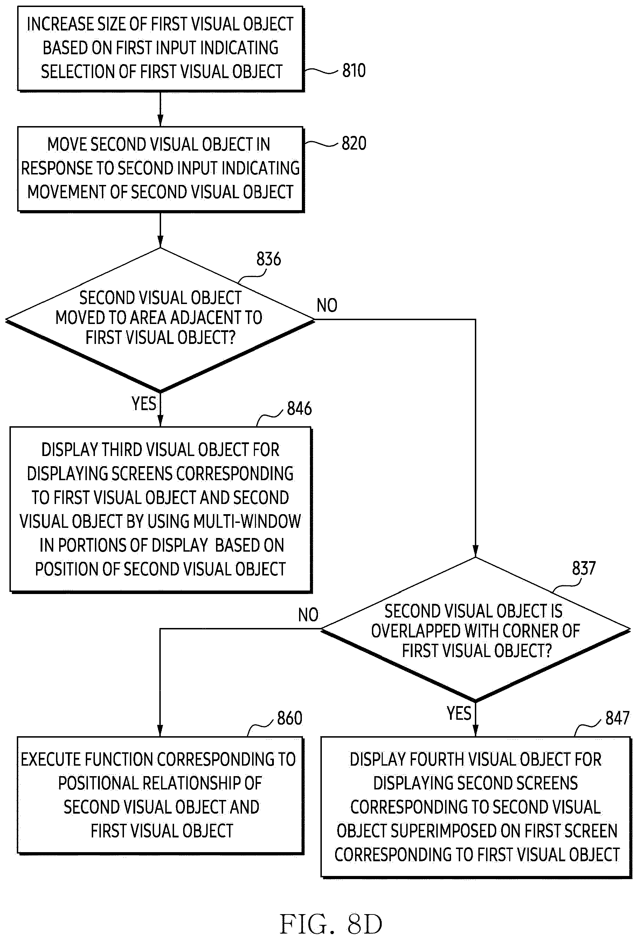

Referring to FIG. 8D, in operation 836 after the operations 810 and 820 of FIG. 8A, according to an embodiment, the processor of the electronic device may identify whether the second visual object moved to an area adjacent to the first visual object according to the second input. The area of the operation 836 may include a portion of a display on which an area 520 of FIG. 5B and/or the visual object 131 of FIG. 7 are displayed. Based on the second visual object moved to the area of the operation 836, the processor may visualize or emphasize the area. For example, the processor may display the visual objects 432, 442, and 452 of FIGS. 4A and 6A and/or the visual objects 524 of FIGS. 5B to 5C. In case that the second visual object moves to an area adjacent to the first visual object (836-Yes), the processor may perform operation 846. In case that the second visual object is overlapped with the first visual object, or the second visual object is located outside the area of the operation 836 (836-No), the processor may perform operation 837.

Referring to FIG. 8D, in the operation 846, according to an embodiment, the processor of the electronic device may display the third visual object for displaying screens corresponding to the first visual object and the second visual object by using the multi-window in different portions of the display based on the position of the second visual object moved by the second input. The processor may identify a layout corresponding to the position of the second visual object for the first visual object (or an area adjacent to the first visual object in which the second visual object is located) identified based on the operation 836. The processor may display the third visual object for displaying the screens according to the layout. The processor may display icons representing each of the first visual object and the second visual object in the third visual object, according to the layout. The visual objects 434, 444, and 454 of FIG. 4A, the visual objects 525, 526, and 527 of FIG. 5B, and/or the visual objects 533 and 534 of FIG. 5C may be examples of the third visual object displayed by the operation 846.

Referring to FIG. 8D, in the operation 837, according to an embodiment, the processor of the electronic device may identify whether the second visual object moved to an area overlapped with the corner of the first visual object according to or based on the second input. The area of the operation 837 may include areas 612, 614, 616, and 618 of FIG. 6A and areas 721, 722, 723, and 724 of FIG. 7. In case that the second visual object moves to the area overlapped with the corner of the first visual object (837-Yes), the processor may perform operation 847. In case that the second visual object is not overlapped with the corner of the first visual object (837-No), the processor may perform operation 860.

Referring to FIG. 8D, in the operation 847, according to an embodiment, the processor of the electronic device may display a fourth visual object for displaying second screens corresponding to the second visual object based on the corner of the first visual object overlapped with the second visual object together with the first screen corresponding to the first visual object. The fourth visual object of the operation 847 may include a visual object 144 of FIG. 1, the visual object 630 of FIG. 6A, and/or the visual object 750 of FIG. 7.

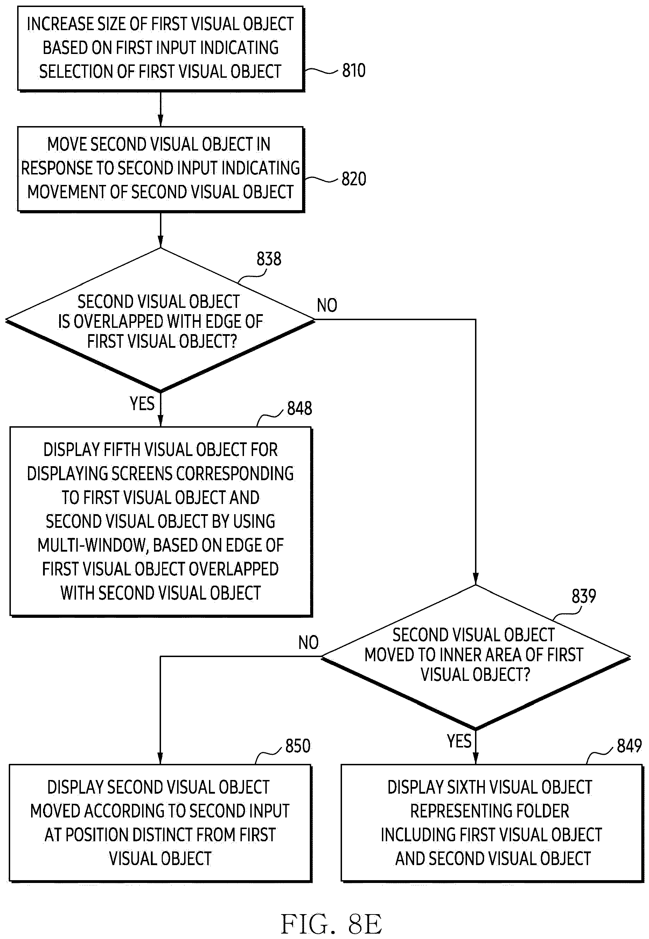

Referring to FIG. 8D, in the operation 860, according to an embodiment, the processor of the electronic device may execute a function corresponding to the positional relationship of the second visual object and the first visual object. For example, the processor may perform operation 838 described with reference to FIG. 8E. Referring to FIG. 8E, in the operation 838 after the operations 810 and 820, according to an embodiment, the processor of the electronic device may identify whether the second visual object moved to an area overlapped with an edge of the first visual object according to the second input. The area overlapped with the edge of the first visual object of the operation 838 may include areas 611, 613, 615, and 617 of FIG. 6B. In case that the second visual object moved to the area of the operation 838 (838-Yes), the processor may perform the operation 848. In case that the second visual object moved to an area different from the area of the operation 838 (838-No), the processor may perform operation 839.

Referring to FIG. 8E, in the operation 848, according to an embodiment, the processor of the electronic device may display a fifth visual object for displaying screens corresponding to the first visual object and the second visual object by using the multi-window on different portions of the display based on the edge of the first visual object overlapped with the second visual object. In an embodiment, based on an input indicating selection of the fifth visual object, the processor may display a plurality of screens having a layout corresponding to the edge of the first visual object described in the operation 838. The visual object 741 of FIG. 7 may be an example of the fifth visual object displayed based on the operation 848.

Referring to FIG. 8E, in the operation 839, according to an embodiment, the processor of the electronic device may identify whether the second visual object moves to an inner area of the first visual object according to the second input. The inner area of the operation 839 may include the area 619 of FIG. 6B. In case that the second visual object moved to the inner area of the first visual object according to the second input is identified (839-Yes), the processor may perform the operation 849. In case that the second visual object is located in another area that is different from the inner area of the operation 839 (839-No), the processor may perform operation 850.

Referring to FIG. 8E, in the operation 849, according to an embodiment, the processor of the electronic device may display a sixth visual object representing a folder including the first visual object and the second visual object. A visual object 660 of FIG. 6B may be an example of the sixth visual object of the operation 849. In response to an input indicating selection of the sixth visual object, the processor may display a visual object (e.g., a visual object 670 of FIG. 6B) corresponding to the folder including the first visual object and the second visual object. Based on the operation 849, the processor may simultaneously support both a function for generating a folder and a function for adding a visual object for the multi-window.

Based on displaying the third visual object to the sixth visual object of the operations 846 and 847 of FIG. 8D and the operations 848 and 849 of FIG. 8E, the processor may at least temporarily stop displaying the first visual object and/or the second visual object on the display. For example, the processor that displayed at least one of the third visual object to the sixth visual object may hide or/or remove the first visual object and/or the second visual object in the display.

Referring to FIG. 8E, in the operation 850, the processor may display the second visual object moved according to the second input at a position distinct from the first visual object. In case that the second visual object is moved to an area different from all of areas of the operations 836, 837, 838, and 839, the processor may display the second visual object at a position independent of the first visual object.

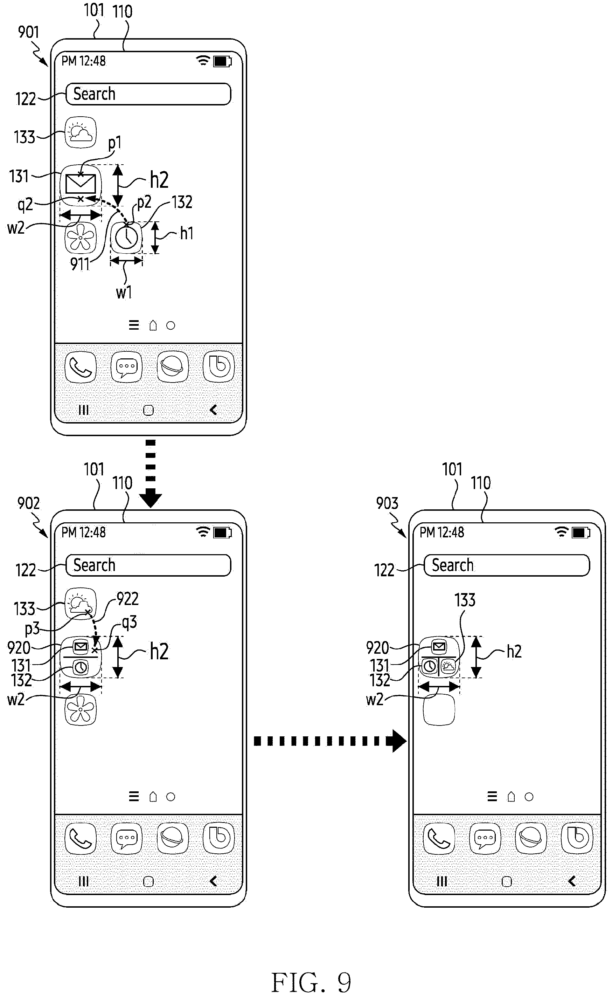

FIG. 9 illustrates an example of an operation of an electronic device 101 that identified an input indicating an overlap of visual objects 131, 132, and 133. The electronic device 101 of FIGS. 1 and 2 and/or a processor 210 of FIG. 2 may perform the operation of the electronic device 101 described with reference to FIG. 9. The operation of the electronic device 101 described with reference to FIG. 9 may be associated with at least one of operations of FIGS. 3 and/or 8A to 8E.

Referring to FIG. 9, states 901, 902, and 903 of the electronic device 101 receiving an input overlapping at least two of the visual objects 131, 132, and 133 are illustrated. In the state 901, the electronic device 101 may enlarge a visual object 131 based on a first input (e.g., a long-touch gesture performed on a position p1) indicating selection of the visual object 131. For example, a width w2 and a height h2 of the visual object 131 in the state 901 may be greater than a width w1 and a height h1 of another visual object 132. While receiving the first input, the electronic device 101 may identify a second input indicating movement of the visual object 132. The embodiment is not limited thereto, and the electronic device 101 may identify the second input after the first input. The second input may include a drag gesture initiated at a position p2 of the display 110 on which the visual object 132 is displayed and performed by a fingertip dragged along a path 911. In case that the visual object 132 moved to the position q2 in the visual object 131 is identified based on the second input, the electronic device 101 may switch from the state 901 to the state 902.

In the state 902 of FIG. 9, the electronic device 101 may display a visual object 920 having a form of a container including the visual objects 131 and 132 similar to states 403 and 404 of FIG. 4A and a state 503 of FIG. 5C. In the state 902 of displaying the visual object 920, based on identifying a tap gesture for an empty area (or an idle area) of the display 110, the electronic device 101 may generate and/or display a visual object for providing screens corresponding to the visual objects 131 and 132 included in the visual object 920. In the state 902 of FIG. 9, the electronic device 101 may identify a third input for adding a software application to the visual object 920. For example, the third input may include a drag gesture, initiated from a position p3 where the visual object 133 is displayed, and performed by a fingertip dragged along a path 922. The electronic device 101 that identified the visual object 133 moved to the position q3 in the visual object 920 based on the third input may switch from the state 902 to the state 903.

In the state 903 of FIG. 9, the electronic device 101 may display the visual objects 131, 132, and 133 identified by the first input to the third input in the visual object 920. The electronic device 101 may display the visual objects 131, 132, and 133 on different portions in the visual object 920. In the state 903, based on identifying the tap gesture for the empty area (or the idle area) of the display 110, the electronic device 101 may generate and/or display a visual object (e.g., visual objects 533 and 534 of FIG. 5C) for simultaneously providing three screens corresponding to the visual objects 131, 132, and 133 in the visual object 920.

As described above, according to an embodiment, the electronic device 101 may sequentially identify or add screens to be displayed based on the multi-window, based on the first input to the third input performed discretely.

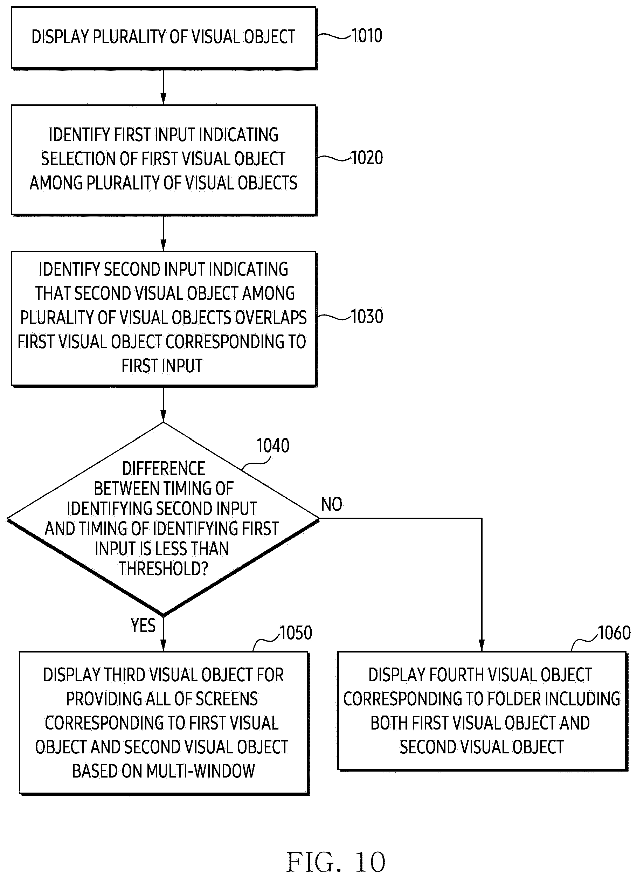

FIG. 10 illustrates an example of a flowchart of an electronic device according to an embodiment. The electronic device 101 of FIGS. 1 and 2 and/or a processor 210 of FIG. 2 may perform operation of the electronic device 101 described with reference to FIG. 10. The operation of the electronic device 101 described with reference to FIG. 10 may be associated with at least one of operations of FIGS. 3 and/or 8A to 8E.

Referring to FIG. 10, in operation 1010, according to an embodiment, a processor of an electronic device may display a plurality of visual objects. The processor may perform the operation 1010 of FIG. 10 similarly to operation 310 of FIG. 3. For example, the processor may perform the operation 1010 based on execution of a launcher application 230 of FIG. 2.

Referring to FIG. 10, in operation 1020, according to an embodiment, the processor of the electronic device may identify a first input indicating selection of a first visual object among the plurality of visual objects. The processor may perform the operation 1020 of FIG. 10, similarly to operation 320 of FIG. 3. The first input of the operation 1020 may correspond to a first input of operation 810 of FIGS. 8A to 8E.

Referring to FIG. 10, in operation 1030, according to an embodiment, the processor of the electronic device may identify a second input indicating that a second visual object among the plurality of visual objects overlaps the first visual object corresponding to the first input. The second input identified based on the operation 1020 may include a second input of operation 330 of FIG. 3 and/or a second input of operation 820 of FIGS. 8A to 8E.

Referring to FIG. 10, in operation 1040, according to an embodiment, the processor of the electronic device may identify whether a difference between timing of identifying the second input and timing of identifying the first input is less than a threshold. Based on the operation 1030, the processor may identify whether the second input is identified in a designated period (e.g., a time interval formed after the first input by the threshold) after the first input. The designated period may be formed to determine whether the second input is an input indicating addition of a visual object for the multi-window or an input for generating a folder. In case that difference in the operation 1030 is less than the threshold (1040-Yes), the processor may perform operation 1050. In case that the difference in the operation 1030 is greater than or equal to the threshold (1040-No), the processor may perform operation 1060.

Referring to FIG. 10, in the operation 1050, according to an embodiment, the processor of the electronic device may display a third visual object for providing all of the screens corresponding to the first visual object and the second visual object based on the multi-window. The third visual object may be provided to execute software applications corresponding to the screens based on multi-tasking. The third visual object of the operation 1050 may correspond to the third visual object of operation 350 of FIG. 3. The third visual object may correspond to a function for displaying the screens based on a layout corresponding to a position and/or a direction of the second visual object overlapped on the first visual object by the second input.

Referring to FIG. 10, in the operation 1060, according to an embodiment, the processor of the electronic device may display a fourth visual object corresponding to a folder including both the first visual object and the second visual object. The fourth visual object of the operation 1060 may include the visual object 660 of FIG. 6B. Referring to operations 1040, 1050, and 1060, an embodiment of displaying the third visual object based on the first input and the second input identified along an interval less than the threshold was described, but the embodiment is not limited thereto. In an embodiment, the processor may perform the operation 1050 in case that the difference between the timings for identifying the first input and the second input is greater than or equal to the threshold, and may perform the operation 1060 in case that the difference is less than the threshold.

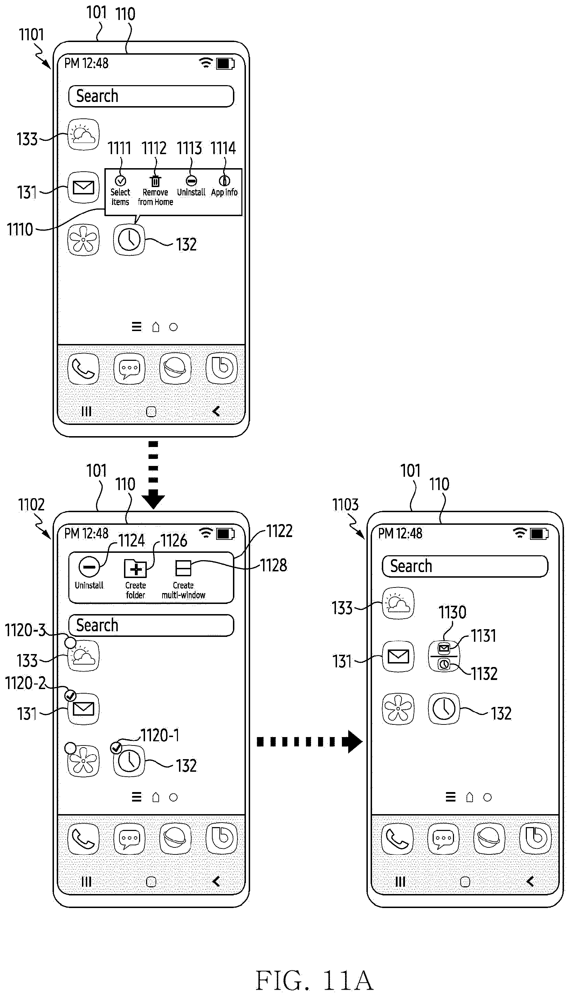

Hereinafter, an exemplary operation of an electronic device providing a menu including an option for generating a visual object providing a plurality of screens will be described with reference to FIGS. 11A to 11B.

FIGS. 11A to 11B illustrate an example of an operation of an electronic device 101 that identified an input for generating a visual object providing a plurality of screens. The electronic device 101 of FIGS. 1 and 2 and/or a processor 210 of FIG. 2 may perform an operation of the electronic device 101 described with reference to FIGS. 11A to 11B. The operation of the electronic device 101 described with reference to FIGS. 11A to 11B may be associated with at least one of operations of FIGS. 3, 8A to 8E, and/or 10.

Referring to FIGS. 11A to 11B, different states 1101, 1102, 1103, 1104, 1105, 1106, and 1107 of the electronic device 101 receiving an input for generating a visual object providing a plurality of screens are illustrated. In the state 1101 of FIG. 11A, the electronic device 101 may display a screen including visual objects 131 and 132 corresponding to software applications. Based on a designated input to the visual object 132 displayed on the display 110, the electronic device 101 may display a visual object 1110 having a form of a menu including options associated with the visual object 132. The designated input may include a long-touch gesture performed exceeding a designated period.

Referring to FIG. 11A, in the state 1101 of displaying the visual object 1110 having a form of a menu corresponding to the visual object 132, options included in the menu are exemplarily illustrated. For example, as options displayed in the visual object 1110, the electronic device 101 may display at least one of a visual object 1111 corresponding to a first option for identifying an input selecting one or more visual objects (or icons) displayed on the display 110, a visual object 1112 corresponding to a second option for removing the visual object 132 from a list of software applications provided through a launcher screen, a visual object 1113 corresponding to a third option for removing a software application corresponding to the visual object 132 from a memory (e.g., a memory 215 of FIG. 2) of the electronic device 101, and a visual object 1114 corresponding to a fourth option for displaying information on the software application corresponding to the visual object 132. In response to an input indicating selection of any one of the visual objects 1111, 1112, 1113, and 1114, the electronic device 101 may execute a function corresponding to the option selected by the input among the first option to the fourth option.

The state 1102 of FIG. 11A may be an exemplary state of the electronic device 101 switched from the state 1101 in response to an input indicating selection of the visual object 1111. Based on the input indicating the selection of the visual object 1111, the electronic device 101 may execute a function for editing a list of software applications displayed through the launcher screen. In the state 1102 of FIG. 11A, the electronic device 101 may display visual objects 1120-1, 1120-2, and 1120-3 overlapped on a corner of the visual object in order to identify an input indicating selection of a visual object (e.g., the visual objects 131 and 132) displayed on the screen. The visual objects 1120-1, 1120-2, and 1120-3 having a form of checkboxes are exemplarily illustrated, but the embodiment is not limited thereto.

In the exemplary state 1102 of FIG. 11A, the electronic device 101 may display a visual object 1122 having a form of a menu including options to be executed based on a visual object selected based on the visual objects 1120-1, 1120-2, and 1120-3. While switching from the state 1101 to the state 1102, the electronic device 101 may hide the visual object 1110 that was displayed in the display 110 or may remove it from the display 110. As options displayed in the visual object 1122, the electronic device 101 may display at least one of a visual object 1124 corresponding to the first option for removing a software application corresponding to the visual object selected based on the visual objects 1120-1, 1120-2, and 1120-3, a visual object 1126 corresponding to the second option for generating a folder including the visual object selected based on the visual objects 1120-1, 1120-2, and 1120-3, or a visual object 1128 corresponding to the third option for generating a visual object that simultaneously provides screens corresponding to the visual objects selected based on the visual objects 1120-1, 1120-2, and 1120-3.

Referring to FIG. 11A, based on the visual objects 1120-1 and 1120-2, in an exemplary state 1102 that an input indicating selection of the visual objects 131 and 132 is identified, the electronic device 101 may identify an input indicating selection of the visual object 1128. The electronic device 101 that identified the input in the state 1102 may switch to the state 1103 of FIG. 11A. In the state 1103, the electronic device 101 may display a visual object 1130 to simultaneously provide screens corresponding to the visual objects 131 and 132 selected based on the visual objects 1120-1 and 1120-2, in the display 110. Referring to FIG. 11A, each of the images 1131 and 1132 included in the visual object 1130 may correspond to icons included in each of the visual objects 131 and 132. In response to an input indicating selection of the visual object 1130, the electronic device 101 may display a plurality of screens arranged in the display 110 based on an arrangement of the visual objects 131 and 132 in the visual object 1130. The plurality of screens may have a layout corresponding to the arrangements of the visual objects 131 and 132.

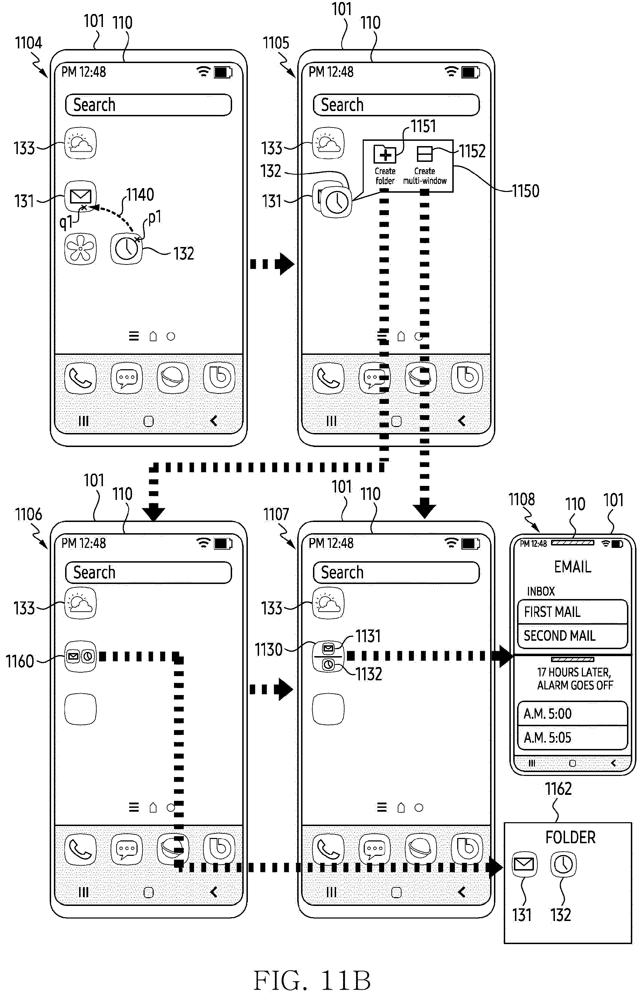

Referring to FIG. 11B, in the state 1104 that the visual objects 131, 132, and 133 are displayed based on the launcher screen, the electronic device 101 may identify a drag gesture initiated at a position p1 where the visual object 132 was displayed and moved to a position q1 where the visual object 1131 was displayed along a path 1140. Based on the drag gesture, the electronic device 101 may display the visual objects 131 and 132 as superimposed on, in the display 110. Based on the visual objects 131 and 132 displayed as superimposed on, the electronic device 101 may switch to the state 1105 of FIG. 11B. In the state 1105 of FIG. 11B, the electronic device 101 may display a visual object 1150 having the form of the menu including executable options based on the visual objects 131 and 132. For example, as options displayed in the visual object 1150, the electronic device 101 may display a visual object 1151 corresponding to the first option for generating a folder (or directory) including the visual objects 131, 132 displayed as superimposed on and/or a visual object 1152 corresponding to the second option for generating and/or displaying a visual object for providing screens corresponding to the visual objects 131 and 132 displayed as superimposed on based on the multi-tasking.

In the state 1105 of FIG. 11B, in response to an input indicating selection of the visual object 1151 corresponding to the first option, the electronic device 101 may switch to the state 1106. In the state 1106, the electronic device 101 may display a visual object 1160 corresponding to the folder including the visual objects 131 and 132. The electronic device 101 that generated the folder including the visual objects 131 and 132 based on the input may refrain from displaying the visual objects 131 and 132 in the display 110. For example, the visual objects 131 and 132 may be displayed based on an input indicating selection of the visual object 1160 corresponding to the folder. In response to the input indicating the selection of the visual object 1160, the electronic device 101 may display a visual object 1162 for displaying the visual objects 131 and 132 included in the folder in the display 110. The visual object 1162 of FIG. 11B may correspond to a visual object 670 of FIG. 6B.

In the state 1105 of FIG. 11B, in response to an input indicating selection of the visual object 1152 corresponding to the second option, the electronic device 101 may switch to the state 1107. In the state 1107, the electronic device 101 may display the visual object 1130 for simultaneously displaying the screens corresponding to the visual objects 131 and 132. The electronic device 101 displaying the visual object 1130 may stop displaying the visual objects 131 and 132 in the display 110. The electronic device 101 may display the visual object 1130 on a portion of the display 110 on which the visual object 131 was displayed. The visual object 1130 may include the images 1131 and 1132 representing each of the visual objects 131 and 132.

In the state 1107 of FIG. 11B, the electronic device 101 may switch to a state 1108 based on the input indicating the selection of the visual object 1130. In the state 1108, the electronic device 101 may execute all of a plurality of software applications (e.g., the email application and the alarm application) indicated by the visual object 1130 based on the multi-tasking. The electronic device 101 may display screens provided from the software applications executed based on the multi-tasking, based on a positional relationship of the images 1131 and 1132 in the display 110. For example, the screens may be disposed along a vertical direction of the display 110, in the display 110.

Although an operation of the electronic device 101 that identified a touch input contacted on the display 110 based on a touch sensor 227 of FIG. 2 was described, the embodiment is not limited thereto. Hereinafter, an embodiment of the electronic device 101 including a head-mounted display (HMD) will be described with reference to FIGS. 12A to 12C.

FIGS. 12A to 12C illustrate an example of an operation of an electronic device 101-3 performed in a virtual space. An electronic device 101 of FIGS. 1 and 2 and/or a processor 210 of FIG. 2 may perform the operation of the electronic device 101-3 described with reference to FIGS. 12A to 12C. The operation of the electronic device 101-3 described with reference to FIGS. 12A to 12C may be associated with at least one of operations of FIGS. 3, 8A to 8E and/or 10.

Referring to FIGS. 12A to 12C, different states 1201, 1202, and 1203 of the electronic device 101-3 displaying at least a portion of the virtual space are illustrated. The electronic device 101-3 is a device that is wearable on a user's head, and may be referred to as a wearable device. The electronic device 101-3 may be designed to provide a user experience for augmented reality (AR), virtual reality (VR), mixed reality (MR), extended reality (XR), and/or video (or visible) see-through (VST). For example, the electronic device 101-3 may include one or more sensors and/or cameras for identifying a position of a user 1210 wearing the electronic device 101-3, motion (e.g., motion of the user 1210's head), direction of gaze, and/or hand gestures (e.g., a gesture performed by hands 1211 and 1212).

In the state 1201 of FIG. 12A, according to an embodiment, the electronic device 101-3 may display at least a portion of a virtual space in field-of-view (FoV) of the user 1210 while being worn by the user 1210. Referring to FIG. 12A, the exemplary state 1201 of the electronic device 101-3 that displays five virtual objects (a A virtual object to a E virtual object) corresponding to different software applications in the FoV is illustrated. According to an embodiment, the electronic device 101-3 may display five virtual objects having a form of a two-dimensional plane in a three-dimensional virtual space. In the state 1201 of FIG. 12A, the A virtual object to the E virtual object may be provided from software applications installed in the electronic device 101-3. For example, each of the A virtual object to the E virtual object may have a form of a screen provided from the software application.

In the state 1201 of FIG. 12A, according to an embodiment, the electronic device 101-3 may identify a position and/or a posture of the hands 1211 and 1212. For example, the electronic device 101-3 may identify the hand 1211 at a position p1 in an external space, which is mapped to a position v1 in the FoV where the E virtual object 1210 is displayed. Referring to FIG. 12A, the electronic device 101-3 that identified the hand 1211 including two fingers having a form of a ring, such as a pinch gesture, may identify a first input indicating selection of a virtual object (e.g., the E virtual object 1210) corresponding to the position v1. While the pinch gesture by the hand 1211 is maintained, the electronic device 101-3 may identify the hand 1212 of a position p2 in the external space corresponding to a position v2 in a C virtual object 1220. In case that the hand 1212 having a posture of the pinch gesture is moved in the external space according to any one of paths 1231 and 1232, the processor may move the C virtual object 1220 along paths 1241 and 1242 in the virtual space corresponding to the paths 1231 and 1232. According to an embodiment, similar to an input overlapping visual objects having an form of an icon representing a software application of FIGS. 4A to 9, based on an input overlapping a plurality of virtual objects (e.g., the C virtual object 1220 and the E virtual object 1210), the electronic device 101-3 may generate and/or display a virtual object that performs a function of a shortcut for displaying a combination of screens corresponding to the plurality of virtual objects.

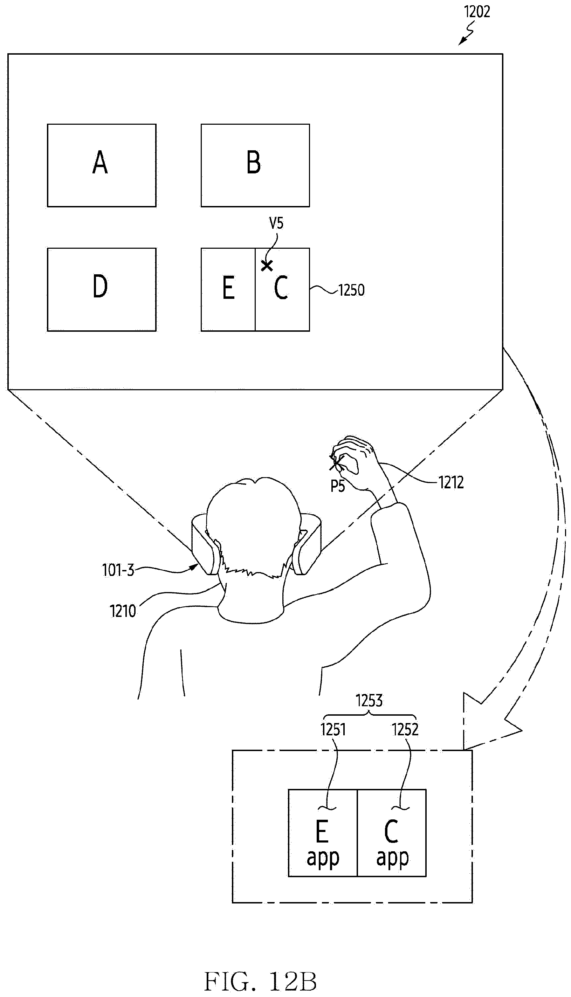

Referring to FIG. 12A, in the state 1201, based on identifying the hand 1212 moved from the position p2 to a position p3 along the path 1231, the electronic device 101-3 may move the C virtual object 1220 from the position v2 to a position v3 along the path 1241 in the FoV. The position v3 in the FoV may correspond to the position p3 of the hand 1212 in the external space. Referring to FIG. 12A, the electronic device 101-3 may identify the C virtual object 1220 moved to the position v3 on a line connecting corners on a boundary line of the E virtual object 1210. In response to an input for moving the C virtual object 1220 to the position v3 on an edge of the E virtual object 1210, the electronic device 101-3 may switch to the state 1202 of FIG. 12B.

Referring to FIG. 12B, in the state 1202, the electronic device 101-3 may display a virtual object 1250 for displaying a combination of the E virtual object 1210 and the C virtual object 1220. The virtual object 1250 may include a combination of images corresponding to each of the E virtual object and the C virtual object. The electronic device 101-3 may combine the images based on a layout of screens to be displayed in the FoV based on selection of the virtual object 1250.

Referring to FIG. 12B, in the state 1202 that the virtual object 1250 is displayed, the electronic device 101-3 may identify the pinch gesture of the hand 1212 performed at a position p5 in the external space. In case that a position v5 in the FoV corresponding to the position p5 overlaps the virtual object 1250 for simultaneously displaying a plurality of screens, the electronic device 101-3 may identify an input indicating the selection of the virtual object 1250 based on the pinch gesture of the hand 1212. Based on the input, the electronic device 101-3 may display the screens in the FoV.

Referring to FIG. 12B, a panel 1253 in which the screens 1251 and 1252 are disposed, displayed by the electronic device 101-3 that identified the input indicating the selection of the virtual object 1250, is illustrated. The electronic device 101-3 may display the panel 1253 having a shape of a two-dimensional plane floating in the FoV of the user 1210 wearing the electronic device 101-3. In the panel 1253, the screen 1251 provided from the software application corresponding to the E virtual object 1210 of FIG. 12A and the screen 1252 provided from the software application corresponding to the C virtual object 1220 of FIG. 12A may be displayed along a horizontal direction of the FoV. For example, the screen 1251 may be located on a right side of the screen 1252 along the horizontal direction in the panel 1253. An arrangement of the screens 1251 and 1252 in the panel 1253 may correspond to an arrangement of images combined in the virtual object 1250. The arrangement of the screens 1251 and 1252 in the panel 1253 may correspond to a positional relationship of the E virtual object 1210 with respect to the C virtual object 1220 that was moved to the position v3 in the state 1201 of FIG. 12A, which was identified for generation of the virtual object 1250.

Referring to FIG. 12A, in the state 1201, electronic device 101-3 may identify the hand 1212 that moves from the position p2 to a position p4 along the path 1232, and has the posture of the pinch gesture. Based on identifying the hand 1212, the electronic device 101-3 may move the C virtual object 1220 from the position v2 to a position v4 along the path 1242 in the FoV corresponding to the path 1232. Based on an input for moving the C virtual object 1220 to the position v4 on a corner of the E virtual object 1210, the electronic device 101-3 may generate a virtual object for providing all of the screens associated with the E virtual object 1210 and the C virtual object 1220.

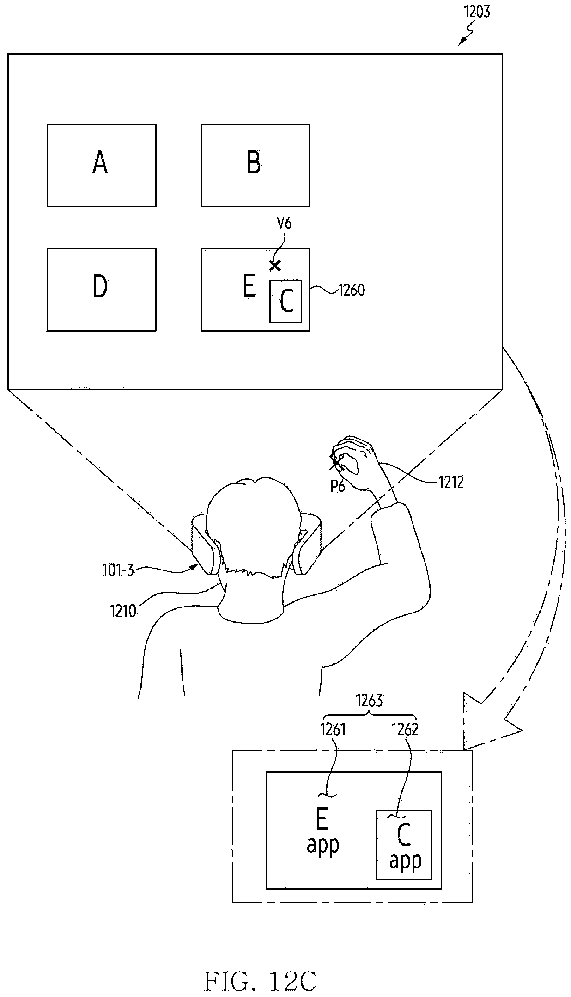

Referring to FIG. 12C, the state 1203 of the electronic device 101-3 displaying a virtual object 1260 for providing all screens associated with the E virtual object 1210 and the C virtual object 1220 based on the input is illustrated. In the state 1203, the electronic device 101-3 may display the virtual object 1260 including a combination of images corresponding to the E virtual object and the C virtual object. In the state 1203 of displaying the virtual object 1260 based on the input for moving the C virtual object 1220 to the position v4 on the corner of the E virtual object 1210, the electronic device 101-3 may display the virtual object 1260 including images arranged based on the positional relationship of the E virtual object 1210 and the C virtual object 1220 whose images are overlapped on the position v4. A positional relationship of images in the virtual object 1260 may guide that the screens associated with the E virtual object 1210 and the C virtual object 1220 are displayed based on PIP.

Referring to FIG. 12C, in the state 1203 displaying the virtual object 1260, the electronic device 101-3 may identify the pinch gesture of the hand 1212 performed at a position p6 in the external space. In case that a position v6 in the FoV corresponding to the position p6 is overlapped with the virtual object 1260, the electronic device 101-3 may identify an input indicating selection of the virtual object 1260 based on the pinch gesture. Based on the input, the electronic device 101-3 may display screens provided from a plurality of software applications corresponding to the virtual object 1260 in the FoV, in the FoV.

Referring to FIG. 12C, a panel 1263 in which screens 1261 and 1262 are disposed, displayed by the electronic device 101-3 that identified the input indicating the selection of the virtual object 1260, is illustrated. The panel 1263 may have the shape of the two-dimensional plane floating in the FoV of the user 1210 wearing the electronic device 101-3, similar to the panel 1253 of FIG. 12B. In the panel 1263, the electronic device 101-3 may display the screen 1262 provided from the software application corresponding to the C virtual object 1220 of FIG. 12A superimposed on the screen 1261 provided from the software application corresponding to the E virtual object 1210 of FIG. 12A. In the panel 1263, for example, the screens 1261 and 1262 may be disposed based on a PIP layout. The positional relationship of the screens 1261 and 1262 may correspond to the positional relationship of the E virtual object 1210 with respect to the C virtual object 1220 that was moved to the position v4 in the state 1201 of FIG. 12A.

As described above, the head-wearable electronic device 101-3 may display the plurality of virtual objects in the FoV based on the VR, the AR, and/or the VST. The electronic device 101-3 may display one virtual object (e.g., the virtual object 1250 of FIG. 12B and/or the virtual object 1260 of FIG. 12C) having a shortcut function for providing the plurality of virtual objects based on a layout of PBP and/or the PIP.

FIGS. 13A to 13B illustrate an example of an operation of an electronic device 101 connected to one or more external displays 1310 and 1320. The electronic device 101 of FIGS. 1 and 2 and/or a processor 210 of FIG. 2 may perform an operation of the electronic device 101 described with reference to FIGS. 13A to 13B. The operation of the electronic device 101 described with reference to FIGS. 13A to 13B may be associated with at least one of an operation 360 of FIG. 3 and operations 840 and 844 of FIGS. 8A to 8C.

Referring to FIG. 13A, an exemplary state 1301 of the electronic device 101 connected to an external display 1310 is illustrated. The electronic device 101 may be connected to the external display 1310 through a wired connection such as a universal serial bus (USB), a digital visual interface (DVI), a high definition multimedia interface (HDMI), a displayport (DP), and/or a d-subminiature (D-sub). The embodiment is not limited thereto, and the electronic device 101 may be connected to the external display 1310 through a wireless connection such as a wireless display (WiDi) and/or a WiFi-direct (e.g., Miracast). In the state 1301 connected to the external display 1310, the electronic device 101 may display a screen provided from a software application through the external display 1310.

In the state 1301 of FIG. 13A, the electronic device 101 may display a screen (e.g., a launcher screen) including a list of software applications on a display 110. In the screen, the electronic device 101 may display visual objects 141 and 142 for providing a plurality of screens based on execution of a plurality of software applications. The visual objects 141 and 142 may be added to the launcher screen based on an operation of the electronic device 101 described with reference to FIGS. 4A to 11B.

Referring to FIG. 13A, in response to an input indicating selection of the visual object 141, the electronic device 101 may display screens corresponding to the visual object 141 on the external display 1310. A layout of the screens displayed on the external display 1310 may correspond to an arrangement of icons (e.g., icons representing each of an alarm application and an email application) included in the visual object 141. In the exemplary state 1301 of FIG. 13A, based on an input to the visual object 141 including icons arranged along a horizontal direction of the display 110, the electronic device 101 may display screens arranged along a horizontal direction of the external display 1310, on the external display 1310. Each of the screens may be provided from software applications corresponding to each of the icons. For example, the electronic device 101 may execute the software applications substantially simultaneously based on the input indicating the selection of the visual object 141. By transmitting a signal for displaying screens provided from the executed software applications to the external display 1310, the electronic device 101 may allow the external display 1310 to display the screens.

Referring to FIG. 13A, in response to an input indicating selection of a visual object 142, the electronic device 101 may display screens corresponding to the visual object 142 on the external display 1310. Based on the input indicating the selection of the visual object 142 for providing screens of the email application and the alarm application, the electronic device 101 may execute the email application and the alarm application. The electronic device 101 may transmit, to the external display 1310, a signal for displaying screens provided from the email application and the alarm application.

Referring to FIG. 13A, an arrangement and/or a layout of screens displayed through the external display 1310 may be associated with a position of icons (e.g., icons corresponding to each of the email application and the alarm application) that were overlapped with each other to generate the visual object 142. Based on the input indicating the selection of the visual object 142, the electronic device 101 may display screens provided from software applications, based on a layout (e.g., a PBP-based layout) arranged along a vertical direction of the external display 1310. The layout may correspond to an arrangement of icons that were overlapped for the generation of the visual object 142. The embodiment is not limited thereto, and the electronic device 101 may display screens using a PIP-based layout.

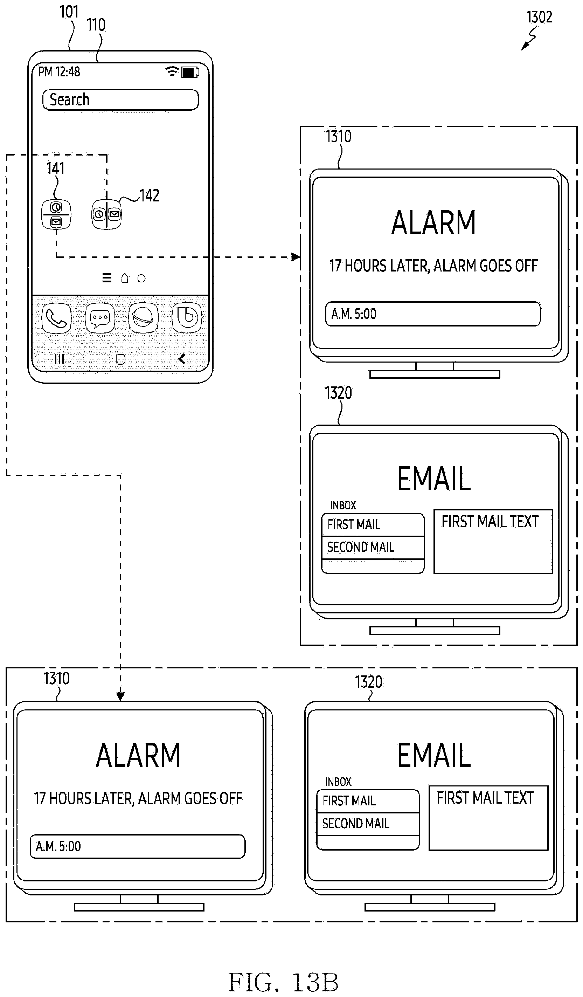

Referring to FIG. 13B, an exemplary state 1302 of the electronic device 101 connected to the plurality of external displays 1310 and 1320 is illustrated. In the state 1302 that the plurality of external displays 1310 and 1320 are connected, the electronic device 101 may control the external displays 1310 and 1320 by using information on an arrangement (or a positional relationship) of the plurality of external displays 1310 and 1320. The arrangement of the plurality of external displays 1310 and 1320 may be associated with coordinates of pixels of the external displays 1310 and 1320 and the display 110 of the electronic device 101. By using the arrangement and/or coordinates, the electronic device 101 may support continuous movement of a visual object between the display and the external displays 1310 and 1320. For example, the electronic device 101 may support a function in which a visual object moves from any one edge of the external display 1310 to any one edge of the external display 1320. The electronic device 101 may identify the arrangement of the plurality of external displays 1310 and 1320 based on a user input.

Referring to FIG. 13B, the electronic device 101 connected to the external displays 1310 and 1320 may adjust the mapping between the screens and the external displays 1310 and 1320, by using the arrangement of the external displays 1310 and 1320, based on the input indicating the selection of the visual object 141 for displaying screens provided from the plurality of software applications (e.g., the email application and the alarm application) along a vertical direction of the display 110. For example, the electronic device 101 may allocate each of the screens to the plurality of external displays 1310 and 1320, by using information indicating the arrangement of the plurality of external displays 1310 and 1320, based on identifying a third input indicating the selection of the visual object (e.g., the visual objects 141 and 142), in the state 1302 connected to the plurality of external displays 1310 and 1320.

For example, in case that the arrangement of the external displays 1310 and 1320 corresponds to a layout of the visual object 141, the electronic device 101 may allocate screens provided based on the visual object 141 to each of the external displays 1310 and 1320. Referring to FIG. 13B, the electronic device 101 that received an input for the visual object 141 for providing screens arranged along the vertical direction of the display 110 may identify the information indicating the arrangement of the external displays 1310 and 1320. According to the information, in case that the external displays 1310 and 1320 are set to be arranged along the vertical direction, the electronic device 101 may transmit signals for the screens to each of the external displays 1310 and 1320. For example, based on the input indicating the selection of the visual object 141 in which icons corresponding to the alarm application and the email application are sequentially displayed along the vertical direction, the electronic device 101 may transmit a first screen corresponding to the alarm application and a second screen corresponding to the email application to each of the external displays 1310 and 1320 arranged along the vertical direction. In case that the external displays 1310 and 1320 are arranged along the horizontal direction of the display 110, the electronic device 101 may transmit a signal for displaying a combination of screens associated with the visual object 141 to any one of the external displays 1310 and 1320, based on the input indicating the selection of the visual object 141.

Referring to FIG. 13B, according to an embodiment, the electronic device 101 may identify the input indicating the selection of the visual object 142 for displaying screens along the horizontal direction. In case that the external displays 1310 and 1320 are arranged along the horizontal direction of the display 110, the electronic device 101 that identified the input may transmit signals for displaying each of screens associated with the visual object 142 to each of the external displays 1310 and 1320. In case that the external displays 1310 and 1320 are sequentially arranged along the horizontal direction, and icons corresponding to each of the alarm application and the email application are sequentially arranged in the visual object 142, the electronic device 101 may provide the first screen corresponding to the alarm application to the external display 1310, and may provide the second screen corresponding to the email application to the external display 1320.

As described above, according to an embodiment, the electronic device 101 may display screens based on the PBP and/or the PIP in the display 110. In case of connected to one or more external displays (e.g., the external displays 1310 and 1320), the electronic device 101 may display the screens based on the PBP and/or the PIP by using the one or more external displays.

FIG. 14 illustrates an example of an operation of an electronic device 101 for adjusting a layout corresponding to a visual object 141. The electronic device 101 of FIGS. 1 and/or 2 and/or a processor 210 of FIG. 2 may perform operation of the electronic device 101 described with reference to FIG. 14. The operation of the electronic device 101 described with reference to FIG. 14 may be associated with at least one of operations of FIGS. 3, 8A to 8E, and/or 10.

Referring to FIG. 14, an exemplary state 1401 of the electronic device 101 displaying the visual object 141 for providing screens based on PBP and/or PIP is illustrated. The visual object 141 may be generated and/or displayed based on the operation of the electronic device 101 described with reference to FIGS. 4A to 11B. For example, the electronic device 101 that identified an input for overlapping a second icon corresponding to an alarm application on a first icon corresponding to an email application may display the visual object 141 for providing screens having a layout corresponding to a positional relationship of the first icon and the second icon. The visual object 141 may include a first image 1411 (e.g., an icon representing the email application) and a second image 1412 (e.g., an icon representing the alarm application), arranged based on the layout. In response to an input (e.g., an input including a tap gesture for the visual object 141) indicating selection of the visual object 141, the electronic device 101 may display a plurality of screens (e.g., screens provided from the email application and the alarm application) in a display 110 based on the layout.

According to an embodiment, the electronic device 101 may identify an input indicating a change in a layout of screens to be provided through the visual object 141. The input may include a long-touch gesture on the visual object 141. In response to the input, the electronic device 101 may display one or more visual objects indicating an option for changing the layout at positions at least partially overlapped with the visual object 141. In the state 1401 of FIG. 14, in response to an input indicating a change in a layout associated with the visual object 141, the electronic device 101 may display visual objects 1421 and 1422 at least partially overlapped with the visual object 141. Each of the visual objects 1421 and 1422 may correspond to options for adjusting a layout of screens to be displayed by an input representing the selection of the visual object 141.

Referring to FIG. 14, the visual object 1421 displayed superimposed on a corner of the visual object 141 may correspond to an option for swapping positions of screens to be displayed through the visual object 141. For example, the electronic device 101 displaying the visual object 141 including the first image 1411 and the second image 1412 sequentially arranged along a vertical direction of the display 110 may swap positions in the visual object 141 of the first image 1411 and the second image 1412 in response to an input to the visual object 1421. Based on the swap of the positions, the electronic device 101 may display a visual object 1430 including the first image 1411 and the second image 1412 sequentially arranged along the vertical direction.

Referring to FIG. 14, a visual object 1422 displayed as superimposed on another corner of the visual object 141 that is different from a corner on which the visual object 1421 is displayed may correspond to an option for changing a direction in which screens to be displayed through the visual object 141 are arranged. For example, the electronic device 101 displaying the visual object 141 for displaying the screens along the vertical direction of the display 110 may change a direction in which the screens are arranged from the vertical direction to the horizontal direction in response to an input indicating selection of the visual object 1422. In response to the input indicating the selection of the visual object 1422, the electronic device 101 may play an animation indicating rotation of the visual object 141, such as the visual object 1440. While rotating the visual object 141 based on the animation, the electronic device 101 may refrain from displaying the visual objects 1421 and 1422 corresponding to options for adjusting the layout.

Referring to FIG. 14, in response to the input indicating the selection of the visual object 1422, the electronic device 101 may display a visual object 1450 for displaying screens arranged along the horizontal direction of the display 110. The visual object 1450 may display the first image 1411 and the second image 1412 arranged along the horizontal direction. The electronic device 101 for displaying the visual object 1450 for providing the screens arranged along the horizontal direction may display a visual object 1423 for swapping positions of the screens. Based on an input indicating selection of the visual object 1423 displayed as superimposed on a corner of the visual object 1450, the electronic device 101 may display a visual object 1460 in which positions of the first image 1411 and the second image 1412 corresponding to the screens are swapped.

According to an embodiment, the electronic device 101 may stop providing options for changing the layout of screens to be provided through the visual object 141 in response to an input to an empty area (or an idle area) in the display 110. For example, based on an input indicating selection of the empty area of the display 110, the electronic device 101 may stop displaying the visual objects 1421, 1422, and 1423. Based on the input, the electronic device 101 may stop (or complete) adjusting the layout of screens to be displayed through the visual object 141.

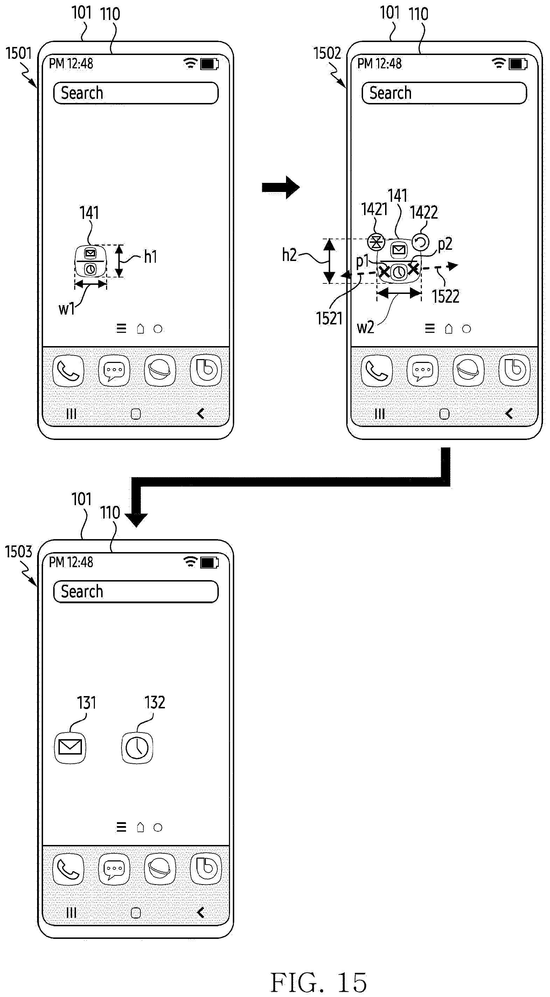

FIG. 15 illustrates an example of an operation of an electronic device 101 according to an embodiment. The electronic device 101 of FIGS. 1 and/or 2 and/or a processor 210 of FIG. 2 may perform operation of the electronic device 101 described with reference to FIG. 15. The operation of the electronic device 101 described with reference to FIG. 15 may be associated with at least one of operations of FIGS. 3, 8A to 8E, and/or 10.

Referring to FIG. 15, states 1501, 1502, and 1503 of the electronic device 101 identifying an input indicating removal of a visual object 141 for providing a plurality of screens are illustrated. In the state 1501 of FIG. 15, the electronic device 101 may display the visual object 141 based on a width w1 and a height h1. In the state 1501 that the visual object 141 is displayed, the electronic device 101 may switch to state 1502 based on identifying a long-touch gesture (e.g., an input for adjusting a layout of screens to be displayed by the visual object 141) for visual object 141. In the state 1502, the electronic device 101 may display the visual object 141 according to an enlarged width w2 and an enlarged height h2. In the state 1502, the electronic device 101 may display visual objects 1421 and 1422 at each of corners of the visual object 141. The visual objects 1421 and 1422 may correspond to options for changing a layout of screens to be provided by the visual object 141.

In the state 1502 of FIG. 15, the electronic device 101 may identify the input indicating the removal of the visual object 141. The input may include drag gestures simultaneously performed by a designated number of external objects. For example, the electronic device 101 may identify a first drag gesture that is started at a position p1 in the visual object 141 and moved out of the visual object 141 along a direction 1521. For example, the electronic device 101 may identify a second drag gesture that is simultaneously identified with the first drag gesture, started at a position p2 in the visual object 141, and moved out of the visual object 141 along a direction 1522. Based on the first drag gesture and the second drag gesture performed substantially simultaneously, the electronic device 101 may identify the input indicating the removal of the visual object 141. Based on the input indicating the removal of the visual object 141, the electronic device 101 may switch from the state 1502 to the state 1503.

Referring to the exemplary state 1503 of FIG. 15, based on the input indicating the removal of the visual object 141, the electronic device 101 may at least temporarily stop displaying the visual object 141 in the display 110. According to an embodiment, the electronic device 101 may display visual objects 131 and 132 including icons representing software applications associated with the visual object 141 in the display 110. By removing the visual object 141 and displaying the visual objects 131 and 132, the electronic device 101 may provide an animation (or visual effect) such as that the visual objects 131 and 132 are divided from the visual object 141.

As described above, according to an embodiment, the electronic device 101 may display the visual object 141 for simultaneously providing the plurality of screens based on a single input. The plurality of screens to be displayed by the visual object 141 may have a layout corresponding to a positional relationship of icons that was overlapped with each other by an input for generating the visual object 141. The layout of the screens provided by the electronic device 101 based on the visual object 141 may include a layout displaying another screen superimposed on a specific screen, such as PIP, in addition to a layout displaying screens in each of areas that is not overlapped with each other, such as PBP.

FIG. 16 is a block diagram illustrating an electronic device 1601 in a network environment 1600 according to various embodiments. The electronic device 1601 of FIG. 16 may be an example of the electronic device 101 of FIGS. 1 to 15. Referring to FIG. 16, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module(SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, a HDMI connector, a USB connector, a SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 1664dB or less) for implementing mMTC, or U-plane latency (e.g., 0.5ms or less for each of downlink (DL) and uplink (UL), or a round trip of 16ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

The various embodiments of the present document and terms used herein are not intended to limit the technical features described in the present document to specific embodiments, and should be understood to include various modifications, equivalents, or substitutes of the embodiment. In relation to the description of the drawings, a similar reference numeral may be used for a similar or related component. The singular form of the noun corresponding to the item may include one or a plurality of items unless explicitly indicated differently in the context involved. In the present document, each of the phrases such as "A or B", "at least one of A and B", "at least one of A or B", "A, B or C", "at least one of A, B and C", and "at least one of A, B or C" may include any one among the items listed together with the corresponding phrase among the phrases, or all possible combinations thereof. Terms such as "1st", "2nd", or "the first", or "the second" may be used simply to distinguish a corresponding component from another corresponding component, and do not limit the corresponding component to other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

The term "module" used in various embodiments of the present document may include units implemented in hardware, software, or firmware, and may be used interchangeably with terms such as logic, logic block, component, or circuit, for example. The module may be an integrally configured component or a minimum unit of the component or a part thereof that performs one or more functions. For example, according to an example, the module may be implemented in the form of an application-specific integrated circuit (ASIC).

Various embodiments of the present document may be implemented as a software (e.g., a program 1640) including one or more instructions stored in a storage medium (e.g., an internal memory 1636 or an external memory 1638) that may be read by a machine (e.g., an electronic device 1601). For example, a processor (e.g., a processor 1620) of the machine (e.g., the electronic device 1601) may call at least one instruction among one or more instructions stored from the storage medium and execute it. This makes it possible for the machine to be operated to perform at least one function according to the at least one instruction called. The one or more instructions may include code generated by a compiler or code that may be executed by an interpreter. The machine-readable storage medium may be provided in the form of a non-transitory storage medium. Here, 'non-transitory' only means that the storage medium is a tangible device and does not include a signal (e.g., electromagnetic waves), and this term does not distinguish between a case where data is semi-permanently stored in the storage medium and a case where data is temporarily stored.

According to an example, a method according to various embodiments disclosed in the present document may be included in a computer program product and provided. The computer program product may be traded between a seller and a buyer as a product. The computer program product may be distributed in the form of machine-readable storage medium (e.g., compact disc read only memory (CD-ROM)), or may be distributed (e.g., downloaded or uploaded) online, through an application store (e.g., Play Store^{™}) or directly between two user devices (e.g., smartphones). In case of the online distribution, at least a portion of the computer program product may be at least temporarily stored or temporarily generated in the machine-readable storage medium, such as the memory of a manufacturer's server, an application store's server, or a relay server.

According to various embodiments, each component (e.g., module or program) of the above-described components may include a single or plural entity, and some of the plurality of entities may be separately disposed in other components. According to various embodiments, one or more components among the above-described corresponding components or operations may be omitted, or one or more other components or operations may be added. Alternatively or additionally, a plurality of components (e.g., module or program) may be integrated into one component. In this case, the integrated component may perform one or more functions of each component of the plurality of components identically or similarly to those performed by the corresponding component among the plurality of components prior to the integration. According to various embodiments, operations performed by the module, the program, or another component may be carried out sequentially, in parallel, repeatedly, or heuristically, or one or more of the operations may be executed in a different order or omitted, or one or more other operations may be added.

In an embodiment, a method of displaying a visual object for simultaneously providing a plurality of screens may be required. As described above, according to an embodiment, an electronic device (e.g., an electronic device 101 of FIGS. 1 to 15) may comprise a display (e.g., a display 110 of FIGS. 1 to 15), memory (e.g., memory 215 of FIG. 2), and a processor (e.g., a processor 210 of FIG. 2). The processor may be configured to display a plurality of visual objects (e.g., visual objects 131, 132, and 133 of FIGS. 1, 4A to 4C, 6A to 6B, 7, 9, 11A to 11B, and visual objects 511, 512, and 513 of FIGS. 5A to 5D) on the display. The processor may be configured to identify a first input indicating a selection of a first visual object among the plurality of visual objects. The processor may be configured to move, in response to a second input on a second visual object among the plurality of visual objects, a position of the second visual object from a first position to a second position. The processor may be configured to, in response to identifying that the second visual object in the second position at least partially overlaps a first portion of the first visual object, display a third visual object (e.g., visual objects 141, 142, and 143 of FIG. 1, visual objects 434, 444, and 454 of FIG. 4A, visual objects 525, 526, and 527 of FIG. 5B, visual objects 533 and 534 of FIG. 5C, a visual object 741 of FIG. 7, and a visual object 1130 of FIGS. 11A to 11B) on the display. The processor may be configured to, in response to a third input indicating a selection of the third visual object (e.g., visual objects 141, 142, and 143 of FIG. 1, visual objects 434, 444, and 454 of FIG. 4A, visual objects 525, 526, and 527 of FIG. 5B, visual objects 533 and 534 of FIG. 5C, a visual object 741 of FIG. 7, and a visual object 1130 of FIGS. 11A to 11B), display a first screen, corresponding to the first visual object, within a first area of the display and display a second screen, corresponding to the second visual object, within a second area of the display as a split-view. The processor may be configured to, in response to identifying that the second visual object in the second position overlaps a second portion of the first visual object different to the first portion, display a fourth visual object (e.g., a visual object 144 of FIG. 1, a visual object 630 of FIG. 6A, and a visual object 750 of FIG. 7) on the display. The processor may be configured to, in response to a fourth input indicating a selection of the fourth visual object, display the second screen superimposed on the first screen. According to an embodiment, the electronic device may adjust a layout of screens to be displayed based on the visual object among PBP and/or PIP.

For example, the processor may be configured to, in response to identifying that the second visual object in the second position overlaps the second portion including a corner of the first visual object, display the fourth visual object to display the second screen superimposed on the first screen.

For example, the processor may be configured to, in response to the fourth input indicating a selection of the fourth visual object, display the second screen as a pop-up window with respect to the first screen occupying an entire active area of the display.

For example, the processor may be configured to, in response to identifying that the second visual object in the second position overlaps the first portion including an edge connecting corners of the first visual object, display the third visual object to display the first screen corresponding to the first visual object and the second screen corresponding to the second visual object by using a layout based on the edge.

For example, the processor may be configured to, in response to the third input, display the first screen and the second screen in respective areas of an active area of the display segmented along a direction of the edge.

For example, the processor may be configured to, in response to the first input, enlarge the first visual object among the plurality of visual objects. The processor may be configured to, in response to identifying that the second visual object is moved to a position adjacent to the enlarged first visual object according to the second input, display the fourth visual object including the first visual object and the second visual object which are arranged based on the position.

For example, the processor may be configured to, in response to identifying a release of the second input in a state in which the second position of the second visual object overlaps the fourth visual object, display the third visual object to provide the first screen and the second screen according to the layout corresponding to a position of the second visual object overlapped on the fourth visual object at a timing that the second input is released.

For example, the processor may be configured to, in response to identifying a release of the second input in a state in which the second position of the second visual object is inside the enlarged first visual object, generate a directory including all software applications corresponding to the first visual object and the second visual object within a memory of the electronic device.

For example, the processor may be configured to, in response to identifying a release of the second input in a state in which the second position of the second visual object at least partially overlaps on the first visual object, display a menu including a plurality of options. The menu may include a fifth visual object (e.g., a visual object 1152 of FIG. 11B) corresponding to an option to display the third visual object. The menu may include a sixth visual object (e.g., a visual object 1151 of FIG. 11B) corresponding to an option to generate a directory including all of software applications corresponding to the first visual object and the second visual object.

For example, the processor may be configured to, in response to a fifth input indicating to change the layout of the screens to be provided through the third visual object, display one or more visual objects indicating options to change the layout at positions at least partially overlapped to the third visual object.

For example, the processor may be configured to, in a state in which a plurality of external displays (e.g., external displays 1310 and 1320 of FIGS. 13A to 13B) are connected to the electronic device, allocate, in response to identifying the third input, each of the screens to a respective display from the plurality of external displays using information indicating an arrangement of the plurality of external displays.

As described above, according to an embodiment, a method of an electronic device may comprise displaying (e.g., an operation 310 of FIG. 3) a plurality of visual objects on a display of the electronic device. The method may comprise identifying (e.g., an operation 320 of FIG. 3) a first input indicating a selection of a first visual object among the plurality of visual objects. The method may comprise identifying (e.g., an operation 330 of FIG. 3) a second input indicating a movement of a second visual object among the plurality of visual objects, and moving a position of the second visual object from a first position to a second position according to the second input. The method may comprise, in response to identifying that the second position of the second visual object at least partially overlaps a first portion among portions associated with the first visual object, displaying a third visual object. The method may comprise, in response to a third input indicating a selection of the third visual object, displaying a first screen, corresponding to the first visual object, within a first area of the display and displaying a second screen, corresponding to the second visual object, within a second area of the display as a split-view. The method may comprise, in response to identifying that the second visual object in the second position overlaps a second portion of the first visual object different from the first portion, displaying a fourth visual object on the display. The method may comprise, in response to a fourth input indicating a selection of the fourth visual object, displaying the second screen superimposed on the first screen.

For example, the displaying the third visual object may comprise, in response to identifying that the second visual object in the second position overlaps the second portion including a corner of the first visual object, displaying the fourth visual object to display the second screen corresponding to the second visual object superimposed on the first screen corresponding to the first visual object.

For example, the displaying the screens may comprise, in response to the fourth input indicating a selection of the fourth visual object, displaying the second screen as a pop-up window with respect to the first screen occupying an entire active area of the display.

For example, the displaying the third visual object may comprise, in response to identifying that the second visual object in the second position overlaps the first portion including an edge connecting corners of the first visual object, displaying the third visual object to display the first screen corresponding to the first visual object and the second screen corresponding to the second visual object by using a layout based on the edge. The displaying the screens may comprise, in response to the third input, displaying the first screen and the second screen in respective areas of an active area of the display segmented along a direction of the edge.

For example, the identifying the first input may comprise, in response to the first input, enlarging the first visual object among the plurality of visual objects. The method may comprise, based on identifying that the second visual object moved according to the second input is moved to a position adjacent to the enlarged first visual object, displaying a fourth visual object having a shape including the first visual object and the position. The displaying the third visual object may comprise, based on identifying releasing of the second input in a state that the second visual object is overlapped on the fourth visual object, displaying the third visual object to provide the screens according to the layout corresponding to a position of the second visual object overlapped on the fourth visual object at a timing that the second input is released.

For example, the method may comprise, based on identifying releasing of the second input in a state that the second visual object is moved inside of the enlarged first visual object according to the second input, generating a directory including all of software applications corresponding to the first visual object and the second visual object within a memory of the electronic device.

For example, the changing may comprise, based on identifying releasing of the second input in a state that the second visual object is at least partially overlapped on the first visual object according to the second input, displaying a menu including a plurality of options. The displaying the menu may comprise displaying the menu including a sixth visual object corresponding to an option to generate a directory including all of software applications corresponding to the first visual object and the second visual object and a fifth visual object corresponding to an option to display the third visual object.

For example, the displaying the third visual object may comprise, in response to a fourth input indicating to change the layout of the screens to be provided through the third visual object, displaying one or more visual objects indicating options to change the layout at positions at least partially overlapped to the third visual object.

For example, the displaying the screens may comprise, in a state that the plurality of external displays are connected to the electronic device, allocating, based on identifying a third input indicating to select the third visual object, each of the screens to the plurality of external displays by using information indicating arrangement of the plurality of external displays.

As described above, according to an embodiment, an electronic device may comprise a display and a processor. The processor may be configured to, while displaying a list of software applications, display a visual object for simultaneously providing a plurality of screens in the list. The processor may be configured to display a first screen among the plurality of screens based on the size of an active area of the display in response to an input indicating selection of the visual object. The processor may be configured to display a second screen among the plurality of screens superimposed on the first screen displayed in the active area in response to the input.

For example, the processor may be configured to display the visual object based on a size of an image in the list that represents a software application.

For example, the processor may be configured to display the visual object that includes a first image corresponding to the first screen, has a smaller size than the first image, and includes a second image corresponding to the second screen.

For example, the processor may be configured to display the second image having a position overlapped on one corner of the first image. The processor may be configured to display the second screen at a position adjacent to the corner of the first screen corresponding to the corner of the first image in which the second image is overlapped in response to the input.

As described above, according to an embodiment, a method of an electronic device may comprise displaying a visual object for simultaneously providing a plurality of screens in a list while displaying the list of software applications installed in the electronic device. The method may comprise displaying a first screen among the plurality of screens based on a size of an active area of a display of the electronic device in response to an input indicating selection of the visual object. The method may comprise displaying a second screen among the plurality of screens superimposed on the first screen displayed in the active area in response to the input.

For example, the displaying the visual object may comprise displaying the visual object based on a size of an image in the list that represents a software application.

For example, the displaying the visual object may comprise displaying the visual object that includes the first image corresponding to the first screen, has the smaller size than the first image, and includes the second image corresponding to the second screen.

For example, the displaying the visual object may comprising displaying the second image having the position overlapped on one corner of the first image. The displaying the second screen may comprise displaying the second screen at the position adjacent to the corner of the first screen corresponding to the corner of the first image in which the second image is overlapped in response to the input.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

It will be appreciated that the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

Further aspects of the invention are set out in the following numbered clauses.

### Clause 1

An electronic device comprising:
a display (110);
a touch sensor (227); and
a processor (210), wherein the processor is configured to:
display a plurality of visual objects (131, 132, 133; 511, 512, 513) on the display, each visual object representing an application executable by the electronic device;
identify a first touch on the display, the first touch indicating a first input to select a first visual object from the plurality of visual objects;
identify a second touch on the display, the second touch indicating a second input to select a second visual object from the plurality of visual objects;
identify a movement of the second touch from a first position corresponding to a position of the second visual object to a second position;
move the second visual object from the first position to the second position in response to the identified movement of the second touch; and
in response to determining that the second visual object in the second position overlaps at least a portion of the first visual object, generate and display a third visual object;
display, in response to identifying a third touch on the display, the third touch indicating a third input to select the third visual object, a screen of a first application associated with the first visual object is displayed on a first portion of the display and a screen of a second application associated with the second visual object is displayed on a second portion of
the display.

### Clause 2

The electronic device of clause 1, wherein the processor is further configured to perform one or more of identify the second touch, identify the movement of the second touch and move the second visual object from the first position to the second position while the first touch on
the first visual object is maintained.

### Clause 3

The electronic device of clause 1 or clause 2, wherein the third visual object is configured according to a location of the overlapped portion of the first visual object relative to
the first visual object.

### Clause 4

The electronic device of any of clause 1 to clause 3, wherein the third visual object comprises an image representing the first visual object and an image representing
the second visual object.

### Clause 5

The electronic device of clause 4, wherein the image representing the first visual object comprises a smaller version of the first visual object and the image representing the second visual object comprises a smaller version of
the second visual object.

### Clause 6

The electronic device of clause 4 or clause 5, wherein an arrangement of the image representing the first visual object and the image representing the second visual object in the third visual object is indicative of an arrangement of the first portion of the display relative to a location of the second portion of the display when
the third visual object is selected.

### Clause 7

The electronic device of clause 6, wherein the processor is further configured to:
identify a fourth touch on the third visual object, wherein the fourth touch is held for at least a predetermined time;
identify a movement of the fourth touch; and
change a relative position of the image representing the first visual object and the image representing the second visual object based on the identified movement of
the fourth touch.

### Clause 8

The electronic device of clause 7, wherein:
the movement of the fourth touch comprises a movement indicative of a rotation of the third visual object, and
in response to the movement of the fourth touch, the image representing the first visual object and the image representing the second visual object swap positions in
the third visual object.

### Clause 9

The electronic device of any of the preceding clauses, wherein in response to determining that the second visual object in the second position overlaps at least a second portion of the first visual object, generate and display a fourth visual object;
display, in response to identifying a fourth touch on the display, the fourth touch indicating a fourth input to select the fourth visual object, the screen of the second application is displayed superimposed on a portion of the screen of the first application; and
wherein the second portion of the first visual object is different to the first portion of
the first visual object.

## Claims

1. An electronic device(101), comprising:
a display (110);
memory (215), comprising one or more storage mediums, storing instructions; and
at least one processor (210) comprising processing circuitry, wherein the instructions, when executed by the at least one processor individually and/or collectively, cause the processor to:
display a plurality of visual objects (131, 132, 133; 511, 512, 513) on the display;
identify a first input indicating a selection of a first visual object among the plurality of visual objects;
in response to a second input on a second visual object among the plurality of visual objects, move a position of the second visual object from a first position to a second position according to the second input;
in response to identifying that the second visual object in the second position at least partially overlaps a first portion of the first visual object, display a third visual object (141, 142, 143; 434, 444, 454; 525, 526, 527; 533, 534; 741; 1130) on the display wherein, in response to a third input indicating a selection of the third visual object (141, 142, 143; 434, 444, 454; 525, 526, 527; 533, 534; 741; 1130), a first screen, corresponding to the first visual object, is displayed within a first area of the display and a second screen, corresponding to the second visual object, is displayed within a second area of the display as a split-view; and
in response to identifying that the second visual object in the second position overlaps a second portion of the first visual object different to the first portion, display a fourth visual object (144; 630; 750) on the display.

2. The electronic device of claim 1, wherein the processor is further configured to:
in response to identifying that the second visual object in the second position overlaps the second portion including a corner of the first visual object, display the fourth visual object to display the second screen superimposed on the first screen.

3. The electronic device of claim 1 or claim 2, wherein the processor is further configured to:
in response to a fourth input indicating a selection of the fourth visual object, display the second screen as a pop-up window with respect to the first screen occupying an entire active area of the display.

4. The electronic device of claim 1 to claim 3, wherein the processor is further configured to:
in response to identifying that the second visual object in the second position overlaps the first portion including an edge connecting corners of the first visual object, display the third visual object to display the first screen corresponding to the first visual object and the second screen corresponding to the second visual object by using a layout based on the edge.

5. The electronic device of claim 4, wherein the processor is further configured to:
in response to the third input, display the first screen and the second screen in respective areas of an active area of the display segmented along a direction of the edge.

6. The electronic device of claim 1 to claim 5, wherein the processor is further configured to:
in response to the first input, enlarge the first visual object among the plurality of visual objects; and
in response to identifying that the second visual object is moved to a position adjacent to the enlarged first visual object according to the second input, display the fourth visual object including the first visual object and the second visual object which are arranged based on the position.

7. The electronic device of claim 1 to claim 6, wherein the processor is further configured to:
in response to identifying a release of the second input in a state in which the second position of the second visual object overlaps the fourth visual object, display the third visual object to provide the first screen and the second screen according to the layout corresponding to a position of the second visual object overlapped on the fourth visual object at a timing that the second input is released.

8. The electronic device of claim 5, wherein the processor is further configured to:
in response to identifying a release of the second input in a state in which the second position of the second visual object is inside the enlarged first visual object, generate a directory including all software applications corresponding to the first visual object and the second visual object within a memory of the electronic device.

9. The electronic device of claim 1 to claim 8, wherein the processor is further configured to:
in response to identifying a release of the second input in a state in which the second position of the second visual object at least partially overlaps the first visual object, display a menu including a plurality of options;
wherein the menu includes:
a fifth visual object corresponding to an option to display the third visual object; and
a sixth visual object corresponding to an option to generate a directory including all of software applications corresponding to the first visual object and the second visual object.

10. The electronic device of claim 1 to claim 9, wherein the processor is further configured to:
in response to a fifth input indicating to change the layout of the screens to be provided through the third visual object, display one or more visual objects indicating options to change the layout at positions at least partially overlapped to the third visual object.

11. The electronic device of claim 1 to claim 10, wherein the processor is further configured to:
in a state in which a plurality of external displays (1310, 1320) are connected to the electronic device, allocate, in response to identifying the third input, each of the screens to a respective display from the plurality of external displays using information indicating an arrangement of the plurality of external displays.

12. A method of an electronic device, comprising:
displaying a plurality of visual objects on a display of the electronic device;
identifying a first input indicating a selection of a first visual object among the plurality of visual objects;
identifying a second input indicating a movement of a second visual object among the plurality of visual objects, and moving a position of the second visual object from a first position to a second position according to the second input;
in response to identifying that the second position of the second visual object at least partially overlaps a first portion among portions associated with the first visual object, displaying a third visual object, wherein, in response to a third input indicating a selection of the third visual object, the method further comprises displaying a first screen, corresponding to the first visual object, within a first area of the display and displaying a second screen, corresponding to the second visual object, within a second area of the display as a split-view; and
in response to identifying that the second visual object in the second position overlaps a second portion of the first visual object different to the first portion, displaying a fourth visual object on the display.

13. The method of claim 12, wherein the displaying the third visual object comprises:
in response to identifying that the second visual object in the second position overlaps the second portion including a corner of the first visual object, displaying the fourth visual object to display the second screen corresponding to the second visual object superimposed on the first screen corresponding to the first visual object.

14. The method of claim 12 to claim 13, wherein the displaying the screens comprises:
in response to a fourth input indicating a selection of the fourth visual object, displaying the second screen as a pop-up window with respect to superimposed on the first screen occupying an entire active area of the display.

15. The method of claim 12 to claim 14, wherein the displaying the third visual object comprises:
in response to identifying that the second visual object in the second position overlaps the first portion including an edge connecting corners of the first visual object, displaying the third visual object to display the first screen corresponding to the first visual object and the second screen corresponding to the second visual object by using a layout based on the edge,
wherein the displaying the screens comprises:
in response to the third input, displaying the first screen and the second screen in respective areas of an active area of the display segmented along a direction of the edge.
